# EUROPEAN PATENT APPLICATION

(11) **EP 2 631 759 A2**
(43) Date of publication of application: **28.08.2013**
(21) Application number: 12195667.6
(22) Date of filing: 05.12.2012
(51) Int. Cl.: G06F 3/048, G06F 9/48

(54) **Apparatus and method for switching active application**

(30) Priority: 24.02.2012 KR 20120019075
(71) Applicant: Pantech Co., Ltd, Mapo-gu Seoul 121-270 (KR)
(72) Inventor: Lee, Chang Dae, 121-270 Seoul (KR); Oh, Mi Jung, 121-270 Seoul (KR); Han, Sang Hoon, 121-270 Seoul (KR)
(74) Representative: Jordan, Volker Otto Wilhelm

(57) **Abstract**

An apparatus to switch an application includes an input unit to receive an input for switching a foreground application, the input including an application distinguishing portion associated with an application switching portion, a control unit to determine an application to be run in the foreground among the applications running in a background, the application distinguishing portion corresponding to the application, and an output unit to output the application in a display as the foreground application.

## Description

### CROSS-REFERENCE TO RELATED APPLICATION

This application claims priority from and the benefit under 35 U.S.C. §119(a) of Korean Patent Application No. 10-2012-0019075, filed on February 24, 2012, which is hereby incorporated by reference for all purposes as if fully set forth herein.

### BACKGROUND

FIELD

Exemplary embodiments of the present invention relate to an apparatus and method for switching an application running in a terminal.

DISCUSSION OF THE BACKGROUND

With the development of mobile technologies, various types of applications executable on a mobile terminal have emerged and a mobile terminal can execute and process multiple applications simultaneously. An application ("app") installed in a mobile terminal may be executed by the selection of a user and may be run in background process. If the application is running in the background, the user may check whether the selected application is being executed via a display of the mobile terminal through which an application execution operation is outputted.

As a mobile terminal enables multitasking, a plurality of applications may be executed and processed without terminating an application, and there is a need to switch among the applications being executed. The switching of the applications may be made through switching between a foreground and a background.

In multiprogramming, a foreground is an environment in which a high priority task is executed, and a foreground task refers to a task executed first after ceasing the execution of a task having a lower priority. Further, if a time sharing system user executes a plurality of tasks on a single terminal at the same time, a task with rights of access to a display of the terminal is called a foreground task and a task without rights of access to a display of the terminal is called a background task.

### SUMMARY

Exemplary embodiments of the present invention provide a method for switching an application running in a background to a foreground by sensing an application switching request signal using at least one of a sensor method, a touch method, and a voice method.

Exemplary embodiments of the present invention also provide a method for outputting a list of applications running in a background and switching a selected application among the outputted list of applications to a foreground.

Exemplary embodiments of the present invention also provide a method for updating a list of applications in the same manner as applications stored in an application stack if an application switched to a foreground is executed.

Additional features of the invention will be set forth in the description which follows, and in part will be apparent from the description, or may be learned by practice of the invention.

An exemplary embodiment of the present invention discloses an apparatus to switch an application including an input unit to receive an input for switching a foreground application, the input including an application distinguishing portion associated with an application switching portion, a control unit to determine an application to be run in the foreground among the applications running in a background, the application distinguishing portion corresponding to the application, and an output unit to output the application in a display as the foreground application.

The control unit may output final views of the applications running in the background to the foreground, based on the determined request signal input method and the application switching request, and may determine an application being outputted to the display to be the application to be run in the foreground when the outputted view is maintained for a predetermined period of time and a touch event is generated through the outputted view.

The input unit may include a sensor input unit to receive an input of the application switching request signal determined based on a motion of an object sensed through a camera, a distance and a motion of the object sensed by a proximity sensor, a movement of the terminal sensed by a terrestrial magnetism sensor, and acceleration of the terminal sensed by an acceleration sensor, a touch input unit to receive an input of the application switching request signal determined based on a touch moving direction, a touch start location, and a touch end location, and a voice input unit to receive an input of the application switching request signal determined based on a predetermined voice command.

The determining unit may determine, when a motion registered with a listener is sensed by the sensor, the sensed motion to be the application switching request signal, and the control unit may determine an application in an application stack matched to the registered motion to be the application to be run in the foreground.

The determining unit may convert the sensed voice into text or data when a voice is sensed in a state in which a predetermined function key is touched in a function key area of the terminal, and may determine the sensed voice to be the application switching request signal when the text or data corresponds to predetermined information, and the control unit may determine an application matched to the predetermined information to be the application to be run in the foreground when the text or data corresponds to the predetermined information.

The control unit may include a task managing unit to receive a list of tasks being executed by an application managing unit and final view information of each of the tasks and to manage a list of tasks in a task storing unit based on a change in the list of tasks, a task storing unit to store the list of tasks, and an event receiving unit to receive an update event signal for the entire list of tasks or the changed task from the application managing unit when a change in the list of tasks occurs.

The event receiving unit may receive an event signal requesting the list of tasks stored in the task storing unit, an event signal requesting information about the front task among the list of tasks stored in the task storing unit, an event signal requesting information about a last task among the list of tasks stored in the task storing unit, and an event signal requesting information about a task matched to a name of a predetermined application among the list of tasks stored in the task storing unit.

The determining unit may determine the touch event to be the application switching request signal when a touch event is generated in a predetermined direction in an indicator area of a touch interface of the terminal, and the control unit may determine a predetermined application corresponding to the predetermined direction among the applications running in the background to be the application to be run in the foreground.

The output unit may sequentially output a list of applications running in the background between an initial touch location and a current touch location when a touch event is generated in a predetermined direction in the indicator area of the touch interface of the terminal, the determining unit may determine the touch event to be the application switching request signal when the touch event is generated in the predetermined direction, and the control unit may determine an application in the list outputted at an end time of the touch event to be the application that is to be run in the foreground.

The determining unit may determine the touch event to be the application switching request signal when a touch event is generated using at least three touch points touched in a predetermined direction at least a predetermined distance in the touch interface of the terminal and maintaining at a predetermined interval between adjacent touch points of the at least three touch points, and the control unit may determine a predetermined application corresponding to the predetermined direction among the applications running in the background to be the application that is to be run in the foreground.

The determining unit may determine the touch event to be the application switching request signal when a touch event is generated in a predetermined direction at least a predetermined distance in the function key area of the touch interface of the terminal, and the control unit may determine a predetermined application corresponding to the predetermined direction among the applications running in the background to be the application that is to be run in the foreground.

The determining unit may determine the touch event to be the application switching request signal when a touch event is generated in a predetermined direction at least a predetermined distance in the touch interface of the terminal in a state in which a predetermined function key of the terminal is touched, and the control unit may determine a predetermined application corresponding to the predetermined direction among the applications running in the background to be the application to be run in the foreground.

The determining unit may determine the touch event to be the application switching request signal when a touch event is generated using two touch points sensed in the touch interface of the terminal including one touch point being fixed and the other touch point being touched in a predetermined direction at a predetermined interval from the fixed touch point, and the control unit may determine a predetermined application corresponding to the predetermined direction among the applications running in the background to be the application that is to be run in the foreground.

The determining unit may determine the touch event to be the application switching request signal when a touch event is generated from the function key area of the touch interface of the terminal to an area in which the application being run is outputted, and the control unit may determine a predetermined application corresponding to the predetermined direction among the applications running in the background to be the application that is to be run in the foreground.

An exemplary embodiment of the present invention also discloses an application switching apparatus including an input unit to receive an input of a request signal requesting switching from an application running in a foreground to one of applications running in a background using one of a sensor method, a touch method, and a voice method, and a control unit to determine an input method of the request signal, whether the request signal is an application switching request signal, and an application to be run in the foreground among the applications running in the background based on the determined input method and the application switching request.

The control unit may include a sensor input determining unit to determine the request signal input method to be the sensor method when a motion registered with a listener is sensed by a camera, a proximity sensor, a terrestrial magnetism sensor, and an acceleration sensor, and to determine the sensed motion to be the application switching request signal, a touch input determining unit to determine the request signal input method to be the touch method when a predetermined touch event is sensed in a touch interface of a terminal, and to determine the sensed touch event to be the application switching request signal, and a voice input determining unit to determine the request signal input method to be the voice method when a voice command is sensed through a voice input device of the terminal, and to determine the sensed voice command to be the application switching request signal.

The sensor input determining unit may include a determining unit to determine the application that is to be run in the foreground among the applications running in the background based on a motion of an object sensed through the camera, a distance and a motion of the object sensed by the proximity sensor, a movement of the terminal sensed by the terrestrial magnetism sensor, and acceleration of the terminal sensed by the acceleration sensor.

The control unit may include an updating unit to update a list of applications including information about the applications running in the foreground and the background in the same manner as an application stored in an application stack.

The updating unit may add the determined application to a top of the application stack when an application determined to run in the foreground is absent in the application stack, and may move the determined application to the top of the application stack when the determined application is stored in the application stack.

The updating unit may update the list of applications in the same manner as the application stored in the application stack when an information view of the application determined that is to be run in the foreground is maintained in the foreground for a predetermined period of time and the determined application runs in the foreground as a result of a touch event.

An exemplary embodiment of the present invention also discloses a method that uses a processor to switch an application including receiving an application switching input for switching a foreground application, the application switching input including an application switching portion and an application distinguishing portion contiguous with the application switching portion, determining one or more background applications stored in an active application list in response to the application switching portion, determining an application to be run in a foreground among the applications in the active application list, the application distinguishing portion corresponding to the application, and outputting, using the processor, the application in a display as the foreground application.

An exemplary embodiment of the present invention also discloses a method that uses a processor to switch an application including receiving a request signal requesting switching from an application running in a foreground to one of applications running in a background, determining whether the request signal is inputted using an input method among a sensor input, a touch input, and a voice input, determining whether the request signal is an application switching request signal, determining an application that is to be run in the foreground among the applications running in the background based on the input method and the application switching request signal, and outputting an application switching operation for switching from the application running in the foreground to the determined application that is to be run in the foreground among the applications running in the background.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a diagram illustrating a part of framework of a general mobile terminal operating system.

FIG. 2 is a diagram illustrating a related application switching process.

FIG. 3 is a block diagram illustrating an application switching apparatus according to an exemplary embodiment of the present invention.

FIG. 4 is a block diagram illustrating an application switching apparatus according to an exemplary embodiment of the present invention.

FIG. 5 is a block diagram illustrating a sensor input determining unit of an application switching apparatus according to an exemplary embodiment of the present invention.

FIG. 6 is a block diagram illustrating a touch input determining unit of an application switching apparatus according to an exemplary embodiment of the present invention.

FIG. 7 is a block diagram illustrating a voice input determining unit of an application switching apparatus according to an exemplary embodiment of the present invention.

FIG. 8 and FIG. 9 are diagrams illustrating a process of switching an application using a touch event generated in an indicator area according to an exemplary embodiment of the present invention.

FIG. 10A and FIG. 10B are diagrams illustrating a process of outputting a list of applications using a touch event generated in an indicator area and switching an application according to an exemplary embodiment of the present invention.

FIG. 11 is a diagram illustrating a process of switching an application using a multi touch event according to an exemplary embodiment of the present invention.

FIG. 12 is a diagram illustrating a process of switching an application using a touch event in a function key area according to an exemplary embodiment of the present invention.

FIG. 13 is a flowchart illustrating a method for switching an application using a touch event in association with a home key according to an exemplary embodiment of the present invention.

FIG. 14 is a diagram illustrating a process of switching an application using a touch event in association with a home key according to an exemplary embodiment of the present invention.

FIG. 15 is a flowchart illustrating a method for switching an application using two touch points according to an exemplary embodiment of the present invention.

FIG. 16 is a diagram illustrating a process of switching an application using two touch points according to an exemplary embodiment of the present invention.

FIG. 17 is a flowchart illustrating a process of switching an application using a touch event moving from a function key area to an application execution area according to an exemplary embodiment of the present invention.

FIG. 18 is a diagram illustrating a process of switching an application using a touch event moving from a function key area to an application execution area according to an exemplary embodiment of the present invention.

FIG. 19, FIG. 20, FIG. 21, and FIG. 22 are diagrams illustrating a process of switching an application based on an application switching request detected through a sensor or a camera according to an exemplary embodiment of the present invention.

FIG. 23 is a diagram illustrating a process of switching an application based on an application switching request inputted using a voice signal according to an exemplary embodiment of the present invention.

FIG. 24, FIG. 25, and FIG. 26 are diagrams illustrating an application switching scheme according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

It will be understood that when an element is referred to as being "connected to" another element, it can be directly connected to the other element, or intervening elements may be present.

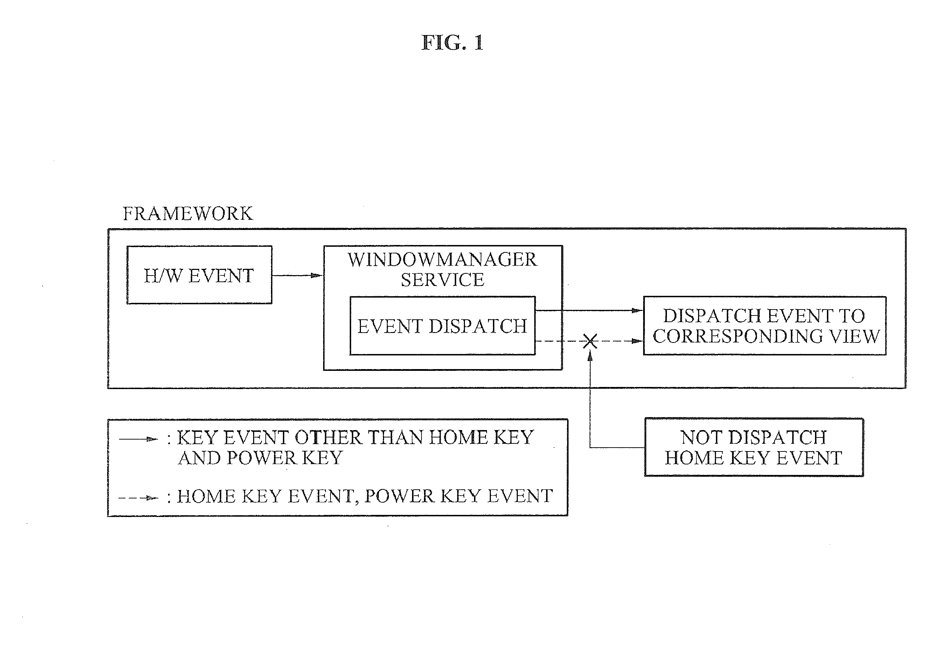

FIG. 1 is a diagram illustrating a part of framework of a general mobile terminal operating system.

A framework in an Android^{™} software stack may provide a class used in generating an application. For example, the framework may include an Activity Manager, a Window® Manager, a Contents Provider, a View System, and the like. The Activity Manager may control a life cycle of an application by method invocation. The Activity Manager may control execution and termination of an application and may pass an intent between applications. The intent may refer to an abstract description of an operation to be performed.

A general application switching process in a mobile terminal may be performed using a home key. The home key may be a dedicated key handled by the framework and may be associated with fundamental operations and frequently used functions. A key event may be recognized and processed in a framework area. When a hardware event, such as a touch event, is generated, an event dispatch of a window manager service may dispatch the generated hardware event to a corresponding view. The event dispatch may assign a system resource to execute a highest priority task in a multitasking environment and may dispatch an event processing result by a processor to the corresponding view.

However, the event dispatch may not dispatch an event associated with the home key and an event associated with a power key to a view, and the events may be processed in a framework area. An implementation of a function using a home key may need a modification of a framework area. Application switching methods may be reflected on the framework area or may be implemented by linking with the framework area.

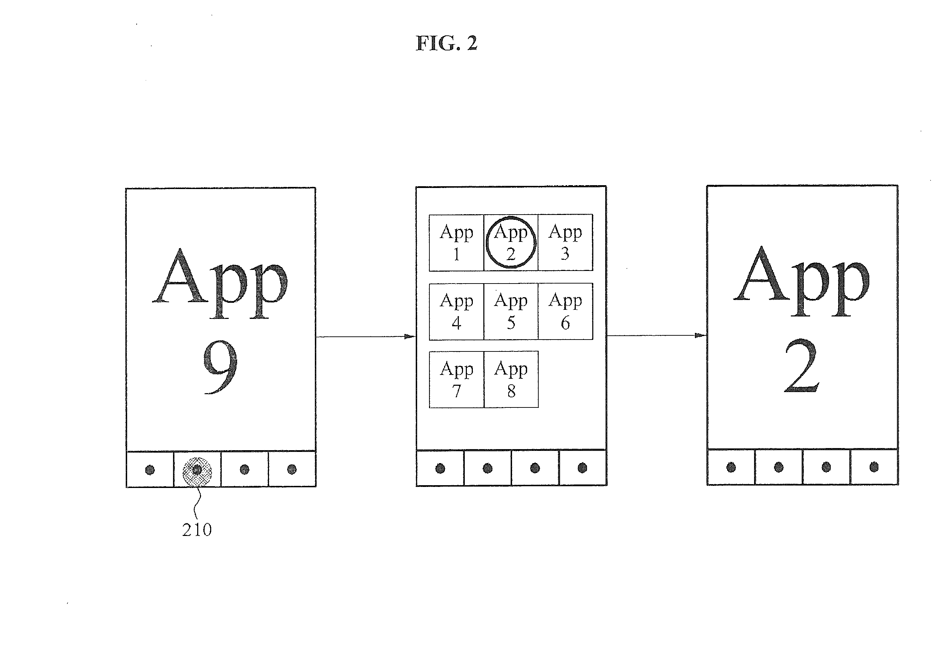

FIG. 2 is a diagram illustrating a conventional application switching process.

Referring to FIG. 2, the conventional application switching process may include outputting a list of applications, also known as an Application List (App List), by long-tapping a home key 210 and switching, to a foreground, an application selected by short-tapping in the outputted list of applications. That is, a gesture of long-tapping the home key 210 and a gesture of short-tapping a view are performed separately to switch another application in the foreground. The list of applications may include applications running in the background.

As shown in FIG. 2, App9 is running in the foreground. A list of applications running in the background may be outputted by long-tapping the home key 210. The list of applications includes App1 to App8. If App2 is selected by short-tapping the App2 displayed in the list of applications, App2 may run in the foreground. By a combination of multiple input signals, an application running in the foreground may be switched from App9 to App2. Application list may include active applications that are being executed in the foreground or the background.

According to aspects of the present invention, an application running in the background may be switched to the foreground in a simpler and more organized manner, thereby reducing the number of gestures used for switching the application.

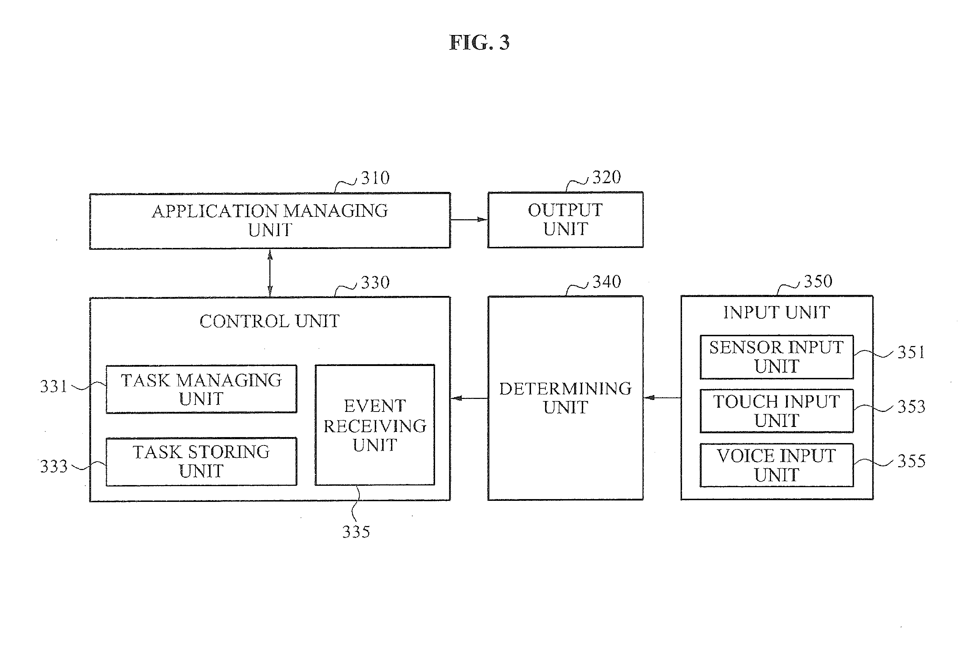

FIG. 3 is a block diagram illustrating an application switching apparatus according to an exemplary embodiment of the present invention.

Referring to FIG. 3, the application switching apparatus may include an input unit 350, a determining unit 340, a control unit 330, and an output unit 320.

The input unit 350 may receive an input of a request signal requesting switching of an application. The switching of an application may correspond to switching an application running in the foreground into a background application and switching another application running in the background into a foreground application.

The input unit 350 may receive an input of various types of signals through at least one of a sensor interface, a touch interface, and a voice interface. For the inputted signal, the determining unit 340 may determine whether it is an application switching request signal.

The input unit 350 may include a sensor input unit 351, a touch input unit 353, and a voice input unit 355.

The sensor input unit 351 may receive an input of a switching request signal determined based on a motion of an object sensed through a camera, and a distance and a motion of the object sensed by a proximity sensor. The motion of the object may be sensed by a plurality of proximity sensors. The type of an application to be switched may be variously set based on the distance and the motion of the object being sensed. The proximity sensor may include a magnetic proximity sensor, an optical proximity sensor, a microwave proximity sensor, an inductive proximity sensor, a capacitive proximity sensor, an eddy current proximity sensor, and the like. The sensor input unit 351 may sense a motion of an object using the camera and may recognize the motion of the object as a switching request signal. For example, the sensor input unit 351 may sense a motion of a hand using the camera and may recognize the motion of the hand as a switching request signal.

The sensor input unit 351 may receive an input of a switching request signal determined based on a movement of the terminal sensed by a terrestrial magnetism sensor. The terrestrial magnetism sensor may sense the movement of the terminal with respect to an x-axis value, a y-axis value, and a z-axis value. The sensor input unit 351 may receive an input of a switching request signal determined based on an extent of shaking or tilting of the terminal sensed by the terrestrial magnetism sensor.

The sensor input unit 351 may receive an input of a switching request signal determined based on the acceleration of the terminal sensed by an acceleration sensor.

The touch input unit 353 may receive an input of a switching request signal determined based on a touch moving direction, a touch start location, and a touch end location. For example, the touch input unit 353 may receive an input of a switching request signal determined based on a moving direction of a touch generated in a predetermined area of the touch interface.

The voice input unit 355 may receive an input of a switching request signal determined based on a voice command. For example, the voice input unit 355 may receive an input of a switching request signal determined based on the name of an application.

The determining unit 340 may determine whether the request signal is inputted using at least one of a sensor input, a touch input, and a voice input. If the input value corresponds to a value sensed by the sensor, the determining unit 340 may determine that the request signal is inputted using a sensor input. If a touch event is sensed, the determining unit 340 may determine that the request signal is inputted using a touch input. If a voice input is converted into data or text, the determining unit 340 may determine that the request signal is inputted using a voice input.

Further, the determining unit 340 may determine whether the request signal is an application switching request signal. If a value corresponding to a registered motion is inputted, the determining unit 340 may determine the request signal as an application switching request signal. For example, if a registered touch event is sensed, the determining unit 340 may determine the sensed touch event as an application switching request signal.

If a motion registered with a listener is sensed by the sensor, the determining unit 340 may determine the sensed motion as an application switching request signal. The listener may correspond to a manner set to recognize a determined motion as a determined signal. The listener is a concept commonly used in Android-based operating system.

The control unit 330 may determine an application in an application stack matched to a motion registered with a listener to be an application that is to be run in the foreground. The application stack may arrange applications in the order of execution. The application stack may include running applications or applications executed in a predetermined range. For example, if the application stack can include ten applications, the most recently executed application may be stored at the top of the application stack and the first executed application among the remaining of the ten applications may be stored at the bottom of the application stack.

For example, the most recently executed application may be stored at the top of the application stack as described above. If it is determined that the most recently executed application corresponds to a motion registered with a listener when the motion registered with the listener is sensed, the most recently executed application may be determined to be an application that is to be run in the foreground.

The control unit 330 may determine an application to be run in the foreground among applications running in the background, based on the request signal input method determined by the determining unit 340 and the application switching request.

The control unit 330 may output final views of applications running in the background to the foreground, based on the request signal input method determined by the determining unit 340 and the application switching request. The final views may be the last image of an application displayed on a screen before returning to the background. When a view outputted to the foreground is maintained for a predetermined period of time and a touch event is generated through the view outputted to the foreground, the control unit 330 may determine the application being outputted to the foreground to be an application that is to be run in the foreground.

The control unit 330 may not immediately execute an application corresponding to a direction of the application switching request among the applications running in the background, but may output, to the foreground, application information of the application corresponding to the direction of the application switching request, such as a final view and/or an edit view of the application. If the outputted view is maintained for a period of time without a request for switching to another application and an input of a touch is generated through the outputted view, the control unit 330 may determine the application corresponding to the application information of the outputted view as an application that is to be run in the foreground.

The control unit 330 may include a task managing unit 331, a task storing unit 333, and an event receiving unit 335.

The task managing unit 331 may receive a list of tasks being executed by the application managing unit 310 and final view information of each of the tasks from the application managing unit 310. The task may include information about an executed activity, information about an executed application, and view information of the executed application, for example, TaskThumbnail.

The task managing unit 331 may manage a list of tasks of the task storing unit 333 based on a change in the list of tasks. The task managing unit 331 may receive an event signal for the change in the list of tasks from the event receiving unit 335.

The task storing unit 333 may store a list of tasks.

If a change in the list of tasks occurs, the event receiving unit 335 may receive an update event signal for the entire list of tasks and an update event signal for the changed task from the application managing unit 310. An executed application may be managed by the application managing unit 310, and a list of tasks including information about the executed application may be changed.

If a change in the list of tasks occurs, the application managing unit 310 may transmit a signal reporting the change to the event receiving unit 335. The signal reporting the change may include an update event signal requesting updating of the entire list of tasks stored in the task storing unit 333. Further, the signal reporting the change may include an update event signal requesting updating the changed task among the tasks in the list.

The event receiving unit 335 may receive an event signal requesting the list of tasks stored in the task storing unit 333. The event receiving unit 335 may receive an event signal requesting information about the front task in the list of tasks stored in the task storing unit 333. The event receiving unit 335 may receive an event signal requesting information about the last task in the list of tasks stored in the task storing unit 333. The event receiving unit 335 may receive an event signal requesting information about a task matched to the name of a determined application in the list of tasks stored in the task storing unit 333.

The task managing unit 331 may receive, from the event receiving unit 335, the signal requesting the list of tasks, the signal requesting information about the front task in the list of tasks, the signal requesting information about the last task in the list of tasks, and the signal requesting information about the task matched to the name of a determined application in the list of tasks.

The task managing unit 331 may search for the information about the list of tasks, the information about the front task, the information about the last task, and the information about the task matched to the name of a determined application in the task storing unit 333, and may transmit the information to the application managing unit 310.

If a voice is sensed while a function key is being touched in a function key area of the terminal, the determining unit 340 may convert the sensed voice into text or data for switching to another application. If the text or data corresponds to application switching input information, the determining unit 340 may determine the sensed voice to be the application switching request signal. For example, the application switching input information may correspond to the name of an application stored in the list of tasks.

If the text or data corresponds to application switching input information, the control unit 330 may determine an application matched to the application switching input information as an application that is to be run in the foreground. The application matched to the application switching input information may be stored in the application stack. The control unit 330 may transmit information about the determined application to the application managing unit 310. The application managing unit 310 may execute the determined application in the foreground.

If a touch event is generated in a predetermined direction in an indicator area of the touch interface of the terminal, the determining unit 340 may determine the touch event generated in the predetermined direction to be the application switching request signal. The touch event may include a touch and hold event for a touch start function and a touch release event for a touch end function in the touch interface.

The output unit 320 may output, to the display of the terminal, a process of switching a foreground running application from the application running in the foreground to the application determined by the control unit 330 among the applications running in the background. The process may include a process of outputting the application running in the foreground to the display of the terminal, a process of outputting the application running in the foreground and the application determined by the control unit 330 to the display of the terminal at the same time, and a process of outputting only the application determined by the control unit 330 to the display of the terminal.

If the control unit 330 determines an application to be switched among the applications running in the background while the output unit 320 is outputting the application running in the foreground to the display of the terminal, the output unit 320 may display the determined application on the display of the terminal. A process of switching from the application running in the foreground to the application determined by the control unit 330 may be outputted to the display of the terminal in real time by displaying a conversion image from the previous foreground application to the determined foreground application.

Further, the output unit 320 may output, to the display of the terminal, a process of switching from the application running in the foreground to an application corresponding to a direction of the application switching request among the applications running in the background.

The output unit 320 may output the application running in the foreground or the background.

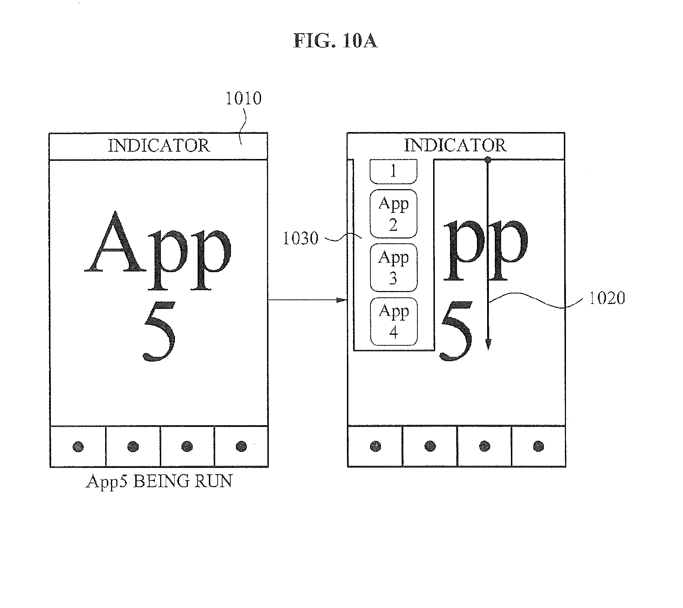

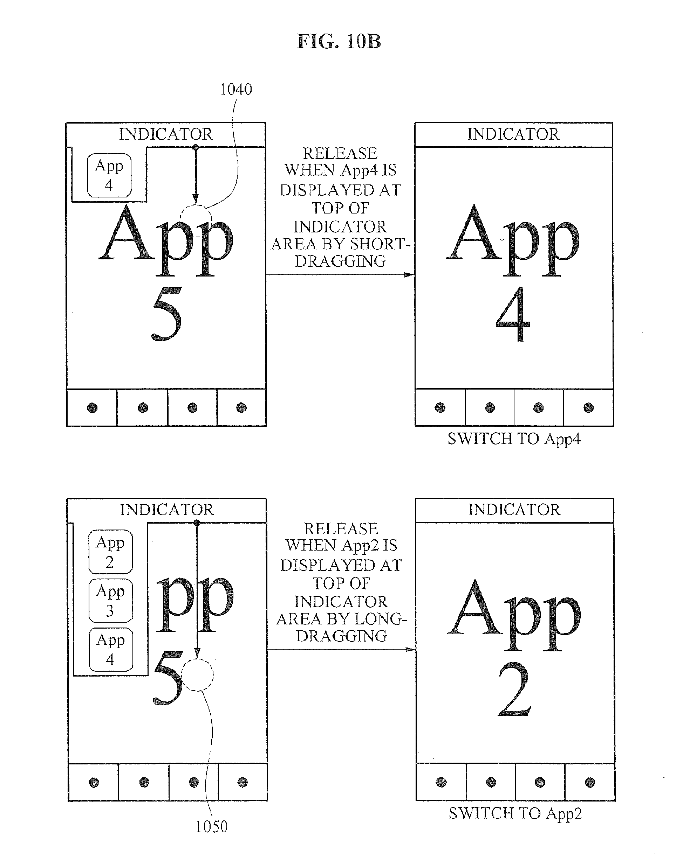

For example, if a touch event is generated in a predetermined direction by dragging a touch input in an indicator area of the touch interface of the terminal, the output unit 320 may sequentially output a list of applications running in the background between an initial touch location and a touch location after the dragging. An example of the output of the list of background applications is shown in FIG. 10A and FIG. 10B.

If a touch event is generated in a predetermined direction, the determining unit 340 may determine the touch event generated in the predetermined direction as an application switching request signal associated with the predetermined direction. Throughout the specification, the "predetermined" may indicate determination by the manufacturer, an application, an end user, or the like. The control unit 330 may determine an application in the list outputted when the touch event is terminated as an application that is to be run in the foreground. For example, the control unit 330 may determine an application outputted at the time of a touch release event being generated as an application that is to be run in the foreground. If a touch event is generated using at least three touch points touched in a direction with at least a distance in the touch interface of the terminal and maintaining an interval between adjacent touch points of the at least three touch points, the determining unit 340 may determine the generated touch event as the application switching request signal.

If a touch event is generated in a direction with a distance in the function key area of the touch interface of the terminal, the determining unit 340 may determine the touch event as an application switching request signal. The function key area may include one or more function keys arranged in the function key area. The function key area may be located in the touch interface including the display view of the terminal, or may be a separate area from the touch interface including the display view of the terminal. The separate area may receive a touch input. The separate area may correspond to an area that may receive a touch input using a dedicated function key from a function key used in the display view of the terminal. The dedicated function key may include a key used in controlling the function of the terminal, such as, for example, a home key, a back key, a menu key, search key, and the like.

If a touch event is generated in a direction with a distance in the touch interface of the terminal in a state where a function key of the terminal is touched, the determining unit 340 may determine the touch event as an application switching request signal. For example, if a left-to-right touch event is generated with a predetermined distance from a state where a home key is touched, the determining unit 340 may determine the touch event as an application switching request signal.

The control unit 330 may determine an application corresponding to the direction of the touch event among the applications running in the background as an application that is to be run in the foreground. For example, if a left-to-right touch event is generated, the control unit 330 may determine an application stacked before the application running in the foreground as an application that is to be run in the foreground. If a right-to-left touch event is generated, an application stacked after the application running in the foreground among the list of applications may be determined as an application that is to be run in the foreground.

If a touch event is generated using two touch points sensed in the touch interface of the terminal, including one touch point being fixed and the other touch point being dragged in a direction with respect to the fixed touch point, the determining unit 340 may determine the touch event as an application switching request signal.

If a touch event is generated from the function key area of the touch interface of the terminal to the display area in which the foreground application is outputted, the determining unit 340 may determine the touch event as an application switching request signal.

The control unit 330 may determine an application corresponding to a touch event among the applications running in the background as an application that is to be run in the foreground.

For example, the application managing unit 310 may perform a similar function as an Activity Manager in an Android-based operating system. The Activity Manager may be a class for activity management. The Activity Manager may manage an activity for each task, and a task identity (ID) may be assigned to each task. The task may include information about an executed activity, final view information of an executed task, and the like. Further, the activity may include an operation, such as execution and termination of an application.

The task managing unit 331 may receive a list of applications running in the background or the foreground from the Activity Manager, and, if an application to be run in the foreground is determined, the task managing unit 331 may move a task to the top of a task stack through the Activity Manager to switch the view. The task stack may include tasks matched to the application stack.

If a change in the list of tasks occurs, the Activity Manager may enable the task managing unit 331 to update the list of tasks by transmitting a TASK_LIST_CHANGED event to the event receiving unit 335. The TASK_LIST_CHANGED event may include an All List Update event and a Task Update event. The All List Update event may correspond to an event requesting updating the entire list of tasks, and the Task Update event may correspond to an event requesting updating the information about a determined task to be updated.

The event receiving unit 335 may receive a GetTaskList event requesting a list of tasks stored in the task storing unit 333 from the determining unit 340. The task managing unit 331 may transmit the list of tasks and view data to the determining unit 340 and the output unit 320 in response to the request received by the event receiving unit 335.

The event receiving unit 335 may receive a GetFrontTask event requesting information about the front task in the list of tasks stored in the task storing unit 333 from the determining unit 340. The task managing unit 331 may transmit the information about the front task and view data to the determining unit 340 and the output unit 320 in response to the request received by the event receiving unit 335.

The event receiving unit 335 may receive a GetLastTask event requesting information about the last task in the list of tasks stored in the task storing unit 333 from the determining unit 340. The task managing unit 331 may transmit the information about the last task and view data to the determining unit 340 and the output unit 320 in response to the request received by the event receiving unit 335.

If the application switching request is inputted using a voice input, the event receiving unit 335 may receive a GetTaskByAppName event requesting information about a task matched to the name of an application in the list of tasks stored in the task storing unit 333 from the determining unit 340. The task managing unit 331 may transmit the information about the corresponding task and view data to the determining unit 340 and the output unit 320 in response to the request received by the event receiving unit 335.

If an application to be run in the foreground is determined, the task managing unit 331 may transmit a task associated with the corresponding application to the Activity Manager. The Activity Manager may arrange the list of tasks with the received task placed at the top. The functions and/or the operations of the determining unit 340 may be performed by the control unit 330.

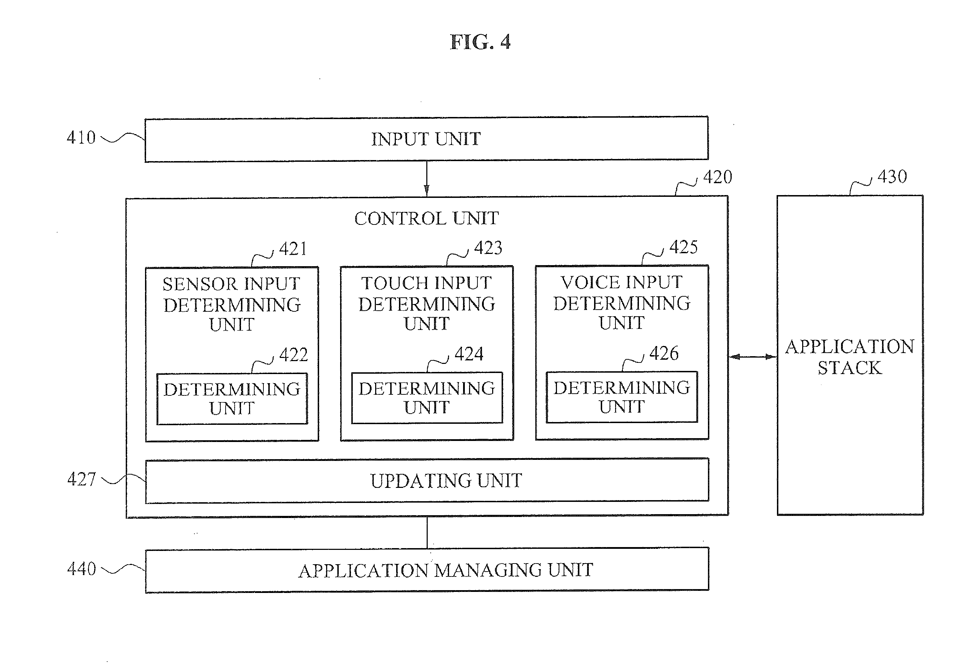

FIG. 4 is a block diagram illustrating an application switching apparatus according to an exemplary embodiment of the present invention. Referring to FIG. 4, the application switching apparatus may include an input unit 410 and a control unit 420. Further, the application switching apparatus may include an application stack 430 and an application managing unit 440.

The input unit 410 may receive an input of a request signal requesting switching an application using at least one of a sensor input, a touch input, and a voice input. The switching of an application may refer to switching a foreground application from an application running in the foreground to one of applications running in a background.

The control unit 420 may determine a request signal input type, e.g., a sensor, a touch, a voice, and the like, and determine whether the request signal corresponds to an application switching request signal. The control unit 420 may determine an application to be run in the foreground among the applications running in the background based on the determined input type and the application switching request. Similar to FIG. 3, the functions and/or the operations of the determining unit 340 may be performed by the control unit 420.

The control unit 420 may output final views of the applications running in the background to the foreground, based on the request signal input type and the application switching request, and, if a view outputted to the foreground is maintained for a period of time and a touch event is generated through the view outputted to the foreground, the control unit 420 may determine an application being outputted to the foreground as an application that is to be run in the foreground.

The control unit 420 may not immediately run an application corresponding to a direction of the application switching request among the applications running in the background, and may output, to the foreground, application information of the application corresponding to the direction of the application switching request, such as a final view and an edit view. If the outputted view is maintained for a determined period of time without a request for switching to another application and if a touch input is generated through the outputted view, the control unit 330 may determine an application corresponding to application information of the outputted view as an application that is to be run in the foreground.

The control unit 420 may include a sensor input determining unit 421, a touch input determining unit 423, a voice input determining unit 425, and an updating unit 427.

If a motion registered with a listener is sensed by a camera, a proximity sensor, a terrestrial magnetism sensor, and/or an acceleration sensor, the sensor input determining unit 421 may determine the request signal input type as a sensor input. If a motion registered with a listener is sensed, the sensor input determining unit 421 may determine the sensed motion as an application switching request signal.

The determining unit 422 may determine an application to be run in the foreground among the applications running in the background based on a motion of an object sensed through the camera, a distance and a motion of the object sensed by the proximity sensor, a movement of the terminal sensed by the terrestrial magnetism sensor, and acceleration of the terminal sensed by the acceleration sensor. For example, the application to be run in the foreground may be determined in various manners depending on whether an object sensed by the proximity sensor is located less than or more than a determined distance. The application to be run in the foreground may be determined in various manners depending on an extent of shaking or tilt in the terminal sensed by the terrestrial magnetism sensor.

If a touch event is sensed in the touch interface of the terminal, the touch input determining unit 423 may determine the request signal input type inputted through the input unit 410 as a touch input, and may determine the sensed touch event as an application switching request signal if the touch event corresponds to the application switching request signal.

The determining unit 424 may determine an application to be an application that is to be run in the foreground in response to a touch event. An application may be set for each touch event, and may be matched to an assigned address in an application stack 430. An application matched to the assigned address in the application stack 430 may be determined as an application that is to be run in the foreground as a result of the corresponding touch event.

If a voice command is sensed through a voice input device of the terminal, the voice input determining unit 425 may determine the request signal input type as a voice input, and may determine the sensed voice command as the application switching request signal.

The determining unit 426 may convert the sensed voice into data or text, and may search for an application that matches the converted data or text in the application stack 430. If the matching application is found, the determining unit 426 may determine the matching application as an application that is to be run in the foreground.

The application stack 430 may include the applications running in the background. The application stack 430 may include applications being run or applications executed in a determined range. For example, if the application stack 430 includes ten applications, the most recently executed application may be stored at the top of the application stack 430 and the first executed application among the remaining applications may be stored at the bottom of the application stack 430.

The updating unit 427 may update a list of applications in the same manner as the applications stored in the application stack 430. The list of applications may include information about applications running in the foreground and the background. The list of applications may include icons and/or detailed information of the applications stored in the application stack 430. The order of arrangement in the list of applications may be the same as an order of execution of the applications.

For example, if the list of applications includes icons of applications arranged vertically, an icon of an application running in the foreground may be located at the top of the list of applications and icons of applications running in the background may be located below the icon of the application running in the foreground according to an order of execution of the applications. Further, an icon of an application running in the foreground may be located at the bottom of the list of applications and icons of applications running in the background may be located above the icon of the application running in the foreground according to an order of execution of the applications.

If the list of applications includes icons of applications arranged horizontally, an icon of an application running in the foreground may be located at the leftmost of the list of applications and icons of applications running in the background may be located right next to the icon of the application running in the foreground according to an order of execution of the applications. If an icon of an application running in the foreground may be located at the rightmost of the list of applications and icons of applications running in the background may be located left next to the icon of the application running in the foreground according to an order of execution of the applications.

If an application determined to be run in the foreground is absent in the application stack 430, the updating unit 427 may add the determined application to the top of the application stack 430.

If an application determined to be run in the foreground is stored in the application stack 430, the updating unit 427 may relocate the determined application to the top of the application stack 430.

The control unit 420 may put the application determined to be run in the foreground in a stand-by state by temporarily displaying the determined application. If the stand-by state is maintained for at least a determined period of time, the control unit 420 may determine to execute the application in the foreground from the stand-by state. If a request for execution of the application being displayed is made by a touch input through a stand-by display, the control unit 420 may determine to execute the application in the foreground according to the touch input.

The updating unit 427 may update the list of applications by adding the application determined to be run in the foreground to the list of applications. If an application to be run in the foreground is determined, the updating unit 427 may not update the list of applications immediately and may update the list of applications in the order of execution of the applications after execution of the application to be run in the foreground is determined.

If an information view of the application determined to be run in the foreground is maintained for a determined period of time in the foreground and if execution of the determined application is confirmed by a touch event, the updating unit 427 may update the list of applications in the same manner as the applications stored in the application stack 430. The application stack 430 may include applications determined to be run in the foreground according to an order of execution of the applications.

The application managing unit 440 may receive the determined application from the control unit 420 and may execute the determined application in the foreground.

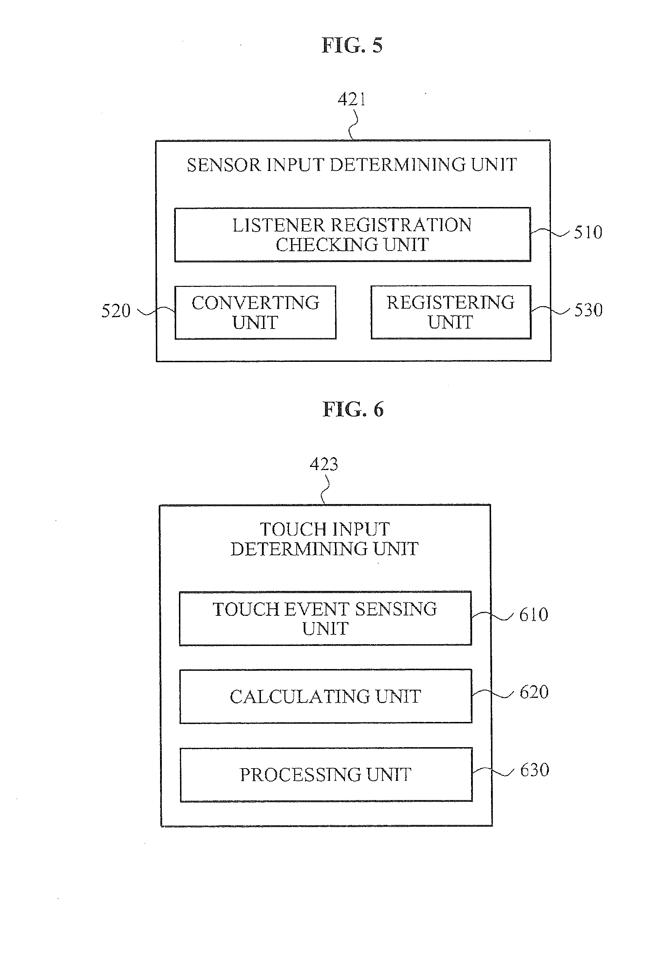

FIG. 5 is a block diagram illustrating a sensor input determining unit of an application switching apparatus according to an exemplary embodiment of the present invention. Referring to FIG. 5, a sensor input determining unit 421 may include a listener registration checking unit 510, a converting unit 520, and a registering unit 530.

If a motion is sensed by a sensor, the listener registration checking unit 510 may check whether the motion is registered with a listener. The motion may correspond to a movement and acceleration of the terminal sensed by the terminal including the sensor, and a motion of an object sensed by the terminal. The sensor may include a variety of sensors that may be mounted and used in a portable terminal, such as a proximity sensor, a terrestrial magnetism sensor, an acceleration sensor, and the like.

If the sensed motion is a motion registered with a listener, the converting unit 520 may convert the sensed motion into an application switching request signal. If the sensed motion corresponds to a request signal for switching to a direction, the converting unit 520 may convert the sensed motion into the request signal for switching to the direction.

If the motion is a motion not registered with a listener, the registering unit 530 may register the motion with a listener. The registering unit 530 may link the motion registered with a listener with an application switching request event.

FIG. 6 is a block diagram illustrating a touch input determining unit of an application switching apparatus according to an exemplary embodiment of the present invention. Referring to FIG. 6, a touch input determining unit 423 may include a touch event sensing unit 610, a calculating unit 620, and a processing unit 630.

The touch event sensing unit 610 may sense a touch down event ("touch and hold the touch input") for touch start and a touch up event ("release of a touch input") for touch end through a touch interface. Further, the touch event sensing unit 610 may determine whether the sensed touch event corresponds to an application switching request signal. If a touch event is sensed, the touch event sensing unit 610 may determine the sensed touch event as an application switching request signal.

The calculating unit 620 may calculate locations of touch points for the touch down event and the touch up event and the distance between the touch points. Also, the calculating unit 620 may calculate whether the distance between the touch points is within a determined error range.

If the calculated interval between the touch points is equal to or more than a determined distance, the processing unit 630 may re-check whether the touch event is an application switching request signal, and may request the application managing unit 440 to output an application matched to the touch event or a list of applications including the matched application.

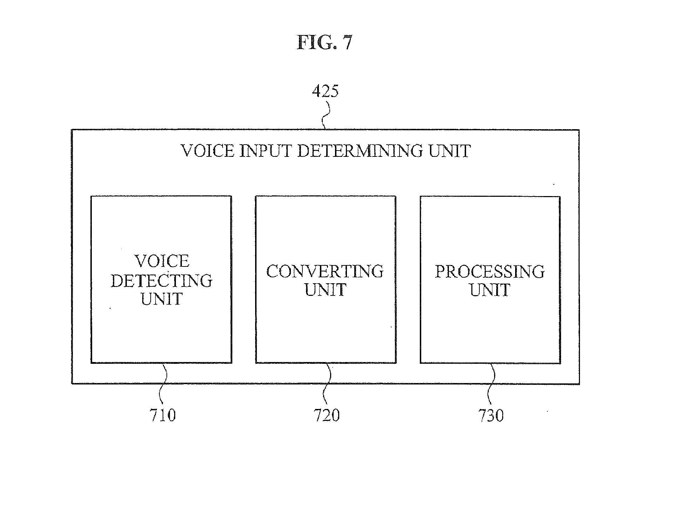

FIG. 7 is a block diagram illustrating a voice input determining unit of an application switching apparatus according to an exemplary embodiment of the present invention. Referring to FIG. 7, a voice input determining unit 425 may include a voice detecting unit 710, a converting unit 720, and a processing unit 730.

The voice detecting unit 710 may detect a voice inputted through a voice input device of the terminal. The voice detecting unit 710 may detect the voice through sampling inputted audio signal.

The converting unit 720 may convert the detected voice into data or text.

If an application matched to the converted data or text is found, the processing unit 730 may request the application managing unit 440 to output the matched application or a list of applications including the matched application. For example, if the name of an application matched to the data or text is found, the processing unit 730 may determine the matched application as an application that is to be run in the foreground.

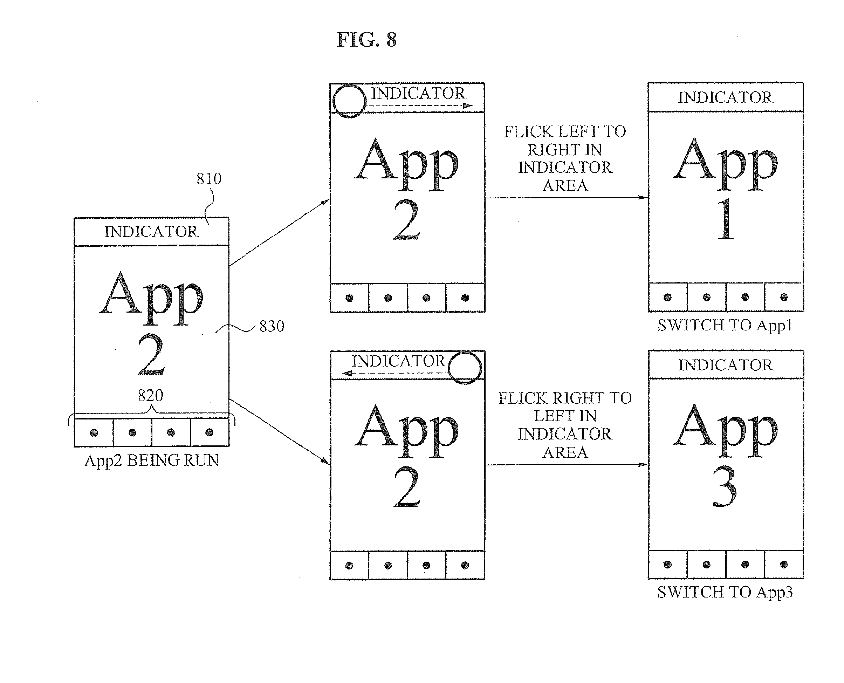

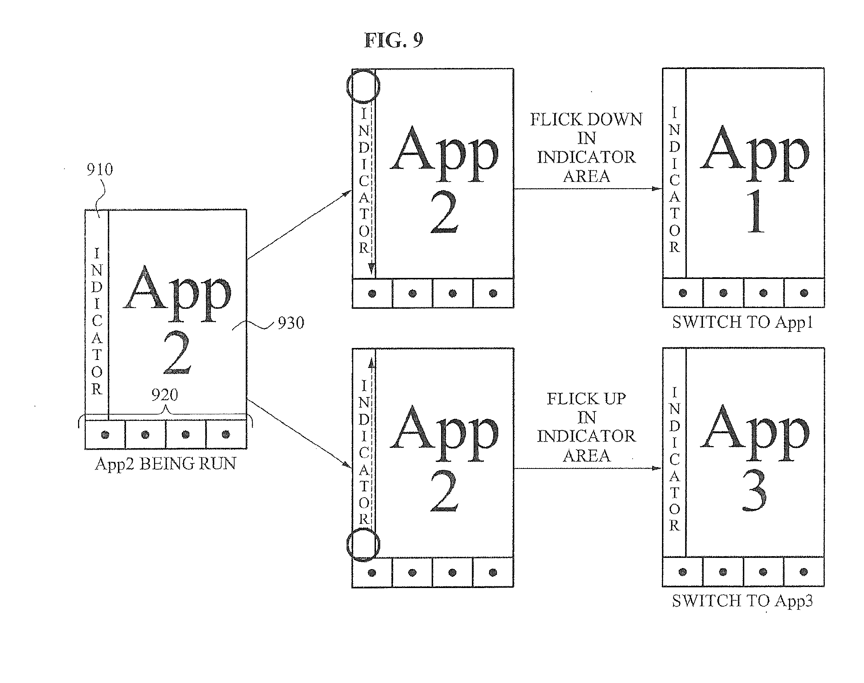

FIG. 8 and FIG. 9 are diagrams illustrating a process of switching an application using a touch event generated in an indicator area according to an exemplary embodiment of the present invention. According to aspects of the present invention, an application switching operation is performed by an application switching input including an application distinguishing portion associated with an application switching portion. The application switching portion may refer to a portion of an input gesture triggering an application switching operation and the application distinguishing portion may refer to a portion of an input gesture determining a specific application to be executed in the foreground. The application switching portion and the application distinguishing portion may be contiguous or simultaneous operations. The application switching portion may generate an application switching signal, and the application distinguishing portion may generate an application distinguishing signal. The application distinguishing signal may associated with an input indicating a specific active application to be run in the foreground, e.g., a touch input indicating an active application to be run in the foreground, a sensor input indicating an active application to be run in the foreground, and a voice input indicating an active application to be run in the foreground. The application switching signal may include a signal triggering an application switching operation.

FIG. 8 illustrates switching of an application using a horizontal flick. FIG. 9 illustrates switching of an application using a vertical flick.

Referring to FIG. 8, a display view of the terminal may include an indicator area 810, a function key area 820, and an application execution area 830. If a flick is generated in the indicator area 810 during execution of App 2 in the application execution area 830, an application corresponding to the flicking direction may be executed in application execution area 830.

The indicator area 810 may correspond to an area set to recognize an application switching request, and may be set at any location in the display view of the terminal. For example, the indicator area 810 may correspond to an area in which a radio signal, a charging state of a battery, an alarm, a time, and a real-time event may be indicated on the terminal.

The flick may correspond to a motion by which a touch down event for touch start, a drag of the touch, and a touch up event for touch end may be sequentially generated in the touch interface, and may be generated in various directions including a vertical direction and a horizontal direction. A touch input on the indicator area 810 may trigger an application switching operation, and a dragging input from the touch input toward a specific direction may determine an application to be executed on the foreground. The touch input and the dragging input may be combined into a single continuous gesture to generate the application switching signal and the application distinguishing signal.

If a left-to-right flick is generated, App 1 set on the left may be executed in the application execution area 830. That is, an application running in the foreground may be switched from App 2 to App 1. If a right-to-left flick is generated, App 3 set on the right may be executed in the application execution area 830. That is, an application running in the foreground may be switched from App 2 to App 3.

The applications set on the left and right next to App 2 may correspond to applications running in the background. The applications running in the background may be set on the left or right, next to App 2, according to an order of execution in a list. For example, App 1 may correspond to the first executed application that is executed before App 2, and App 2 may correspond to an application executed before App 3. Further, App 3 may correspond to the first executed application that is executed before App 2 in the list of applications.

Referring to FIG. 9, the display view of the terminal may include an indicator area 910, a function key area 920, and an application execution area 930. The indicator area 910 may be located in a vertical direction on the display view of the terminal. If a vertical flick is generated in the indicator area 910, an application running in the foreground may be switched to an application corresponding to the vertical flick. If a top-to-bottom flick is generated, App 1 set on the upper side of App 2 may be executed in the application execution area 930. That is, an application running in the foreground may be switched from App 2 to App 1. If a bottom-to-top flick is generated, App 3 set on the lower side of App 2 may be executed in the application execution area 930. That is, an application running in the foreground may be switched from App 2 to App 3. A touch input on the indicator area 910 may trigger an application switching operation, and a dragging input from the touch input toward a specific direction may determine an application to be executed on the foreground. The touch input and the dragging input may be combined into a single continuous gesture to generate the application switching signal and the application distinguishing signal.

FIG. 10A and FIG. 10B are diagrams illustrating a process of outputting a list of applications using a touch event generated in an indicator area and switching an application according to an exemplary embodiment of the present invention.

Referring to 10A, if a flicking event 1020 is generated in an indicator area 1010, a list 1030 of applications running in the background may be outputted to the display view of the terminal according to an order of execution of applications. The list 1030 of applications may display icons of background applications and/or information of background applications.

Referring to10B, if App 4 is outputted to the display view of the terminal at the generation time of a touch up event 1040 after dragging down the touch input from the indicator area 1010, an application running in the foreground may be switched from App 5 to App 4. The touch may be released at the end time of the touch up event 1040. App 4 may correspond to an application executed immediately before App 5 and currently being run in the background. App 3 may correspond to an application executed in the foreground before App 4. App 2 may correspond to an application executed in the foreground before App 3. That is, by dragging down the indicator area 1010, applications executed in the background may be outputted to the display view according to an order of execution.

If App 2 is outputted closest to the indicator area 1010 at the generation time of a touch up event 1050 after dragging down the touch input from the indicator area 1010 longer, an application running in the foreground may be switched from App 5 to App 2. A touch input on the indicator area 1010 may trigger an application switching operation, and a dragging input from the touch input toward a specific direction may determine an application to be executed on the foreground. The touch input and the dragging input may be combined into a single continuous gesture to generate the application switching signal and the application distinguishing signal. The dragging input and the distance between a touch releasing point, e.g., a releasing point 1040 associated with App4, and a releasing point 1050 associated with App 2, and the indicator area 1010 may determine the application distinguishing signal.

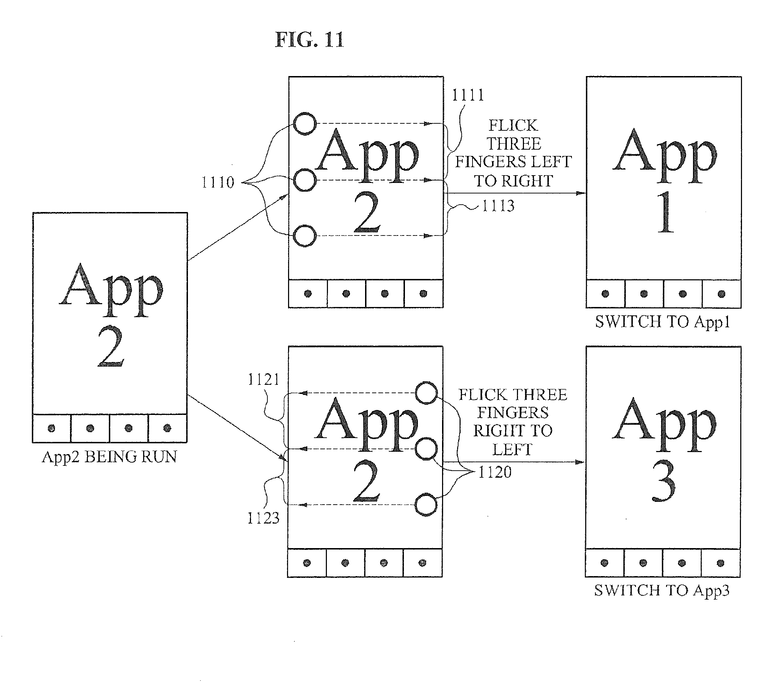

FIG. 11 is a diagram illustrating a process of switching an application using a multi touch event according to an exemplary embodiment of the present invention.

Referring to FIG. 11, if a left-to-right flick 1110 is generated using three touch points in an App 2 execution area, an application running in the foreground may be switched from App 2 to App 1 that is set on the left side of App 2. Distances 1111 and 1113 between adjacent touch points of three touch points may be maintained within a determined error range to recognize the flick 1110 as an application switching request signal requesting switching to App 1. Further, the flick 1110 may be dragged at least a determined distance to recognize the flick 1110 as an application switching request signal requesting switching to App 1.

If a right-to-left flick 1120 is generated using three touch points in the App 2 execution area, an application running in the foreground may be switched from App 2 to App 3 that is set on the right side of App 2. Distances 1121 and 1123 between adjacent touch points of three touch points may be maintained within a determined error range to recognize the flick 1120 as an application switching request signal requesting switching to App 3. Further, the flick 1120 may be dragged at least a determined distance to recognize the flick 1120 as an application switching request signal requesting switching to App 3.

Although FIG. 11 shows three touch points, if a flick is generated using a multi-touch point including more than one touch point, the foreground application switching process may be performed corresponding to a moving direction of the multi-touch point. In order to recognize the flick as an application switching request signal, the distance between adjacent touch points may be maintained within a determined error range and the flick may be dragged at least a determined distance. A multi-touch input on the application execution view may trigger an application switching operation, and a dragging input from the touch input toward a specific direction may determine an application to be executed on the foreground. The touch input and the dragging input may be combined into a single continuous gesture to generate the application switching signal and the application distinguishing signal. The multi-touch input and the maintained distances between touch points 1111 and 1113 may determine whether the application switching signal is to be generated.

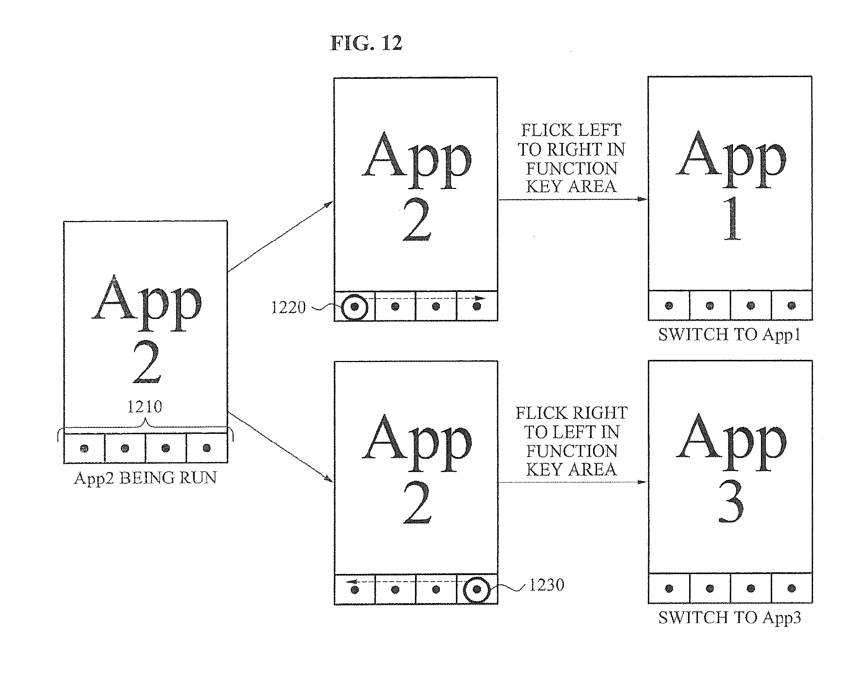

FIG. 12 is a diagram illustrating a process of switching an application using a touch event in a function key area according to an exemplary embodiment of the present invention.

Referring to FIG. 12, if a left-to-right flick is generated after a function key 1220 is touched in a function key area 1210, an application running in the foreground may be switched from App 2 to App 1 set on the left side of App 2. The touch may be dragged at least a determined distance to be recognized as an application switching request signal. Further, determining whether the touch is dragged at least a determined distance may include determining whether a touch input of a next function key is sensed within a determined time after the function key 1220 or a function key 1230 is touched. For example, if an input of a continuous touch using function keys located next to the function key 1220 on the right side is sensed within a determined time after the function key 1220 is touched or if an input of a continuous touch using function keys located next to the function key 1230 on the left side is sensed within a determined time after the function key 1230 is touched, the touch may be recognized as a flick.

Further, if a touch input is dragged in a determined direction at least a determined distance regardless of whether the function key 1220 or 1230 is touched in the function key area 1210, the touch may be recognized as a flick.

If a right-to-left flick is generated after the function key 1230 is touched in the function key area 1210, an application running in the foreground may be switched from App 2 to App 3 that is set on the right to App 2. A touch input on the function key area 1210 may trigger an application switching operation, and a dragging input from the touch input toward a specific direction may determine an application to be executed on the foreground. The touch input and the dragging input may be combined into a single continuous gesture to generate the application switching signal and the application distinguishing signal. Further, the touch input on the function key 1220 may trigger an application switching operation for switching to the left, and the touch input on the function key 1230 may trigger an application switching operation for switching to the right.

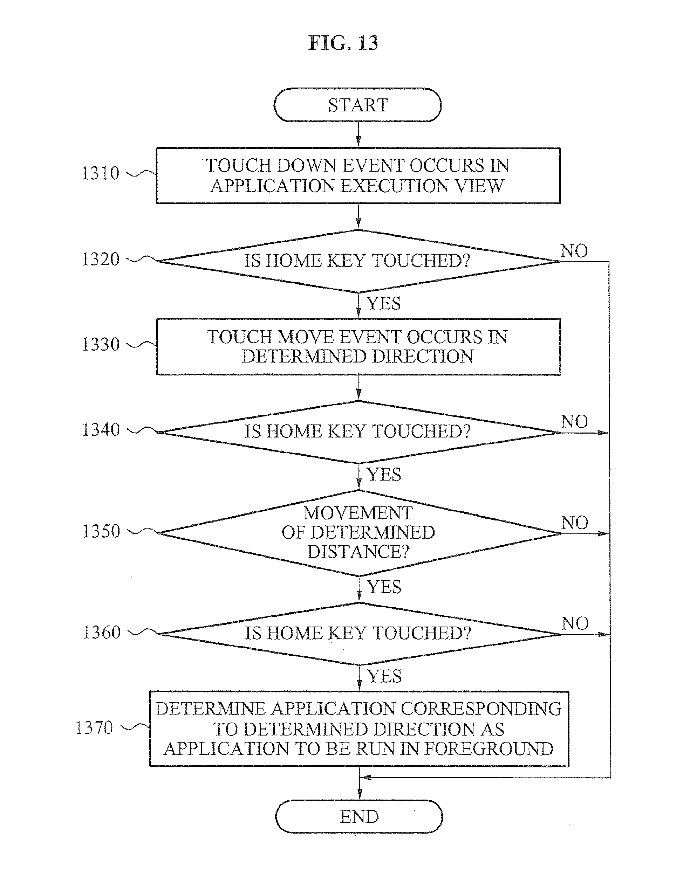

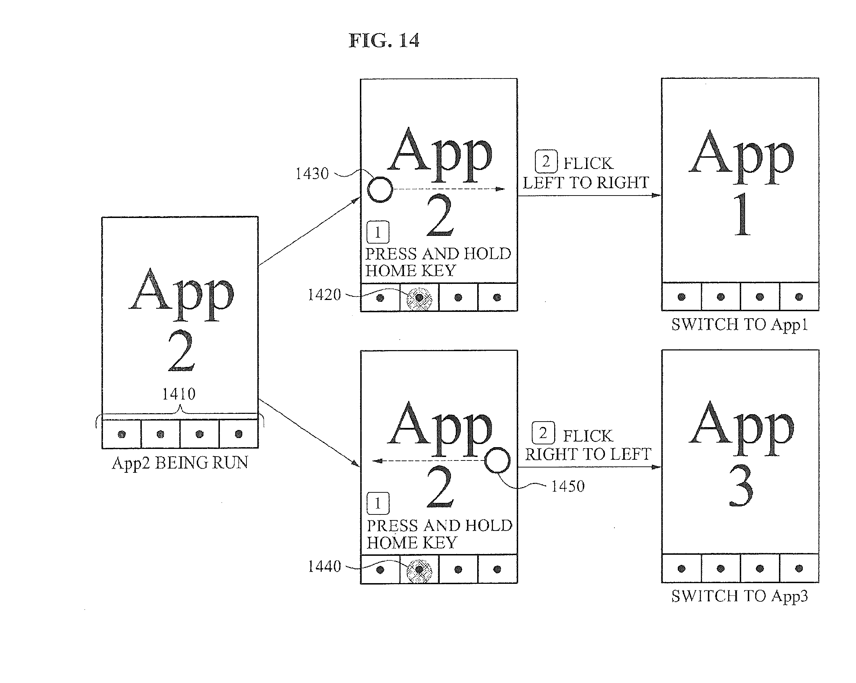

FIG. 13 is a flowchart illustrating a method for switching an application using a touch event in association with a home key according to an exemplary embodiment of the present invention. FIG. 14 is a diagram illustrating a process of switching an application using a touch event in association with a home key according to an exemplary embodiment of the present invention.

Referring to FIG. 13, in operation 1310, a touch down event may be generated in an application execution view by a touch input of a user. A touch event may start from the touch down event.

In operation 1320, the application switching apparatus may determine whether a home key is touched.

In operation 1330, a touch move event (e.g., a dragging of a touch input) may be generated in a direction while the home key is touched. The touch point may move by dragging the touch down input in the determined direction.

In operation 1340, the application switching apparatus may determine whether the home key continues to be touched.

In operation 1350, if the home key continues to be touched, the application switching apparatus may determine whether a moving distance of the touch point is greater than or equal to a threshold distance.

In operation 1360, if the moving distance of the touch point is determined to be greater than or equal to the threshold distance, the application switching apparatus may determine whether the home key continues to be touched.

In operation 1370, if the home key continues to be touched, the application switching apparatus may determine an application corresponding to the determined direction as an application that is to be run in the foreground. The determined direction may correspond to a moving direction of the touch point.

Referring to FIG. 14, if a left-to-right flick 1430 is generated while a home key 1420 is touched in a function key area 1410, App 1 set on the left side of App 2 may be executed in the foreground. That is, an application running in the foreground may be switched from App 2 to App 1. An application switching condition may correspond to a continuous touch using a home key and a directional flick. Although FIG. 14 illustrates the home key 1420 as an example of a function key, the function key may include any key that can serve as a function key.

If a right-to-left flick 1450 is generated while a home key 1440 is touched in the function key area 1410, App 3 set on the right side of App 2 may be executed in the foreground. That is, an application running in the foreground may be switched from App 2 to App 3. A touch input on the function key 1420 and a touch input on an application execution view may trigger an application switching operation, and a dragging input from the touch input toward a specific direction may determine an application to be executed on the foreground. The touch input and the dragging input may be combined into a single continuous gesture to generate the application switching signal and the application distinguishing signal.

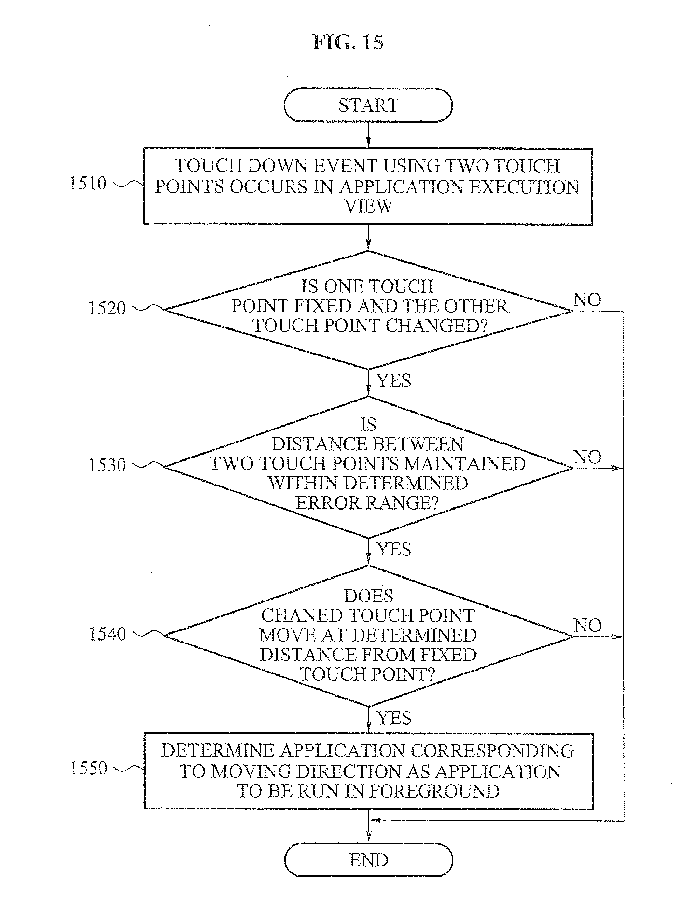

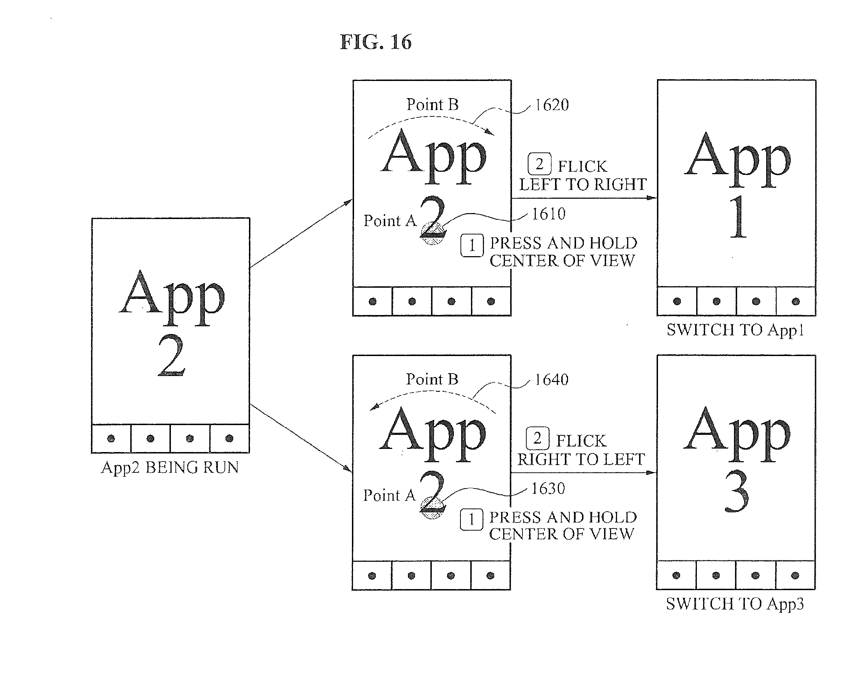

FIG. 15 is a flowchart illustrating a method for switching an application using two touch points according to an exemplary embodiment of the present invention. FIG. 16 is a diagram illustrating a process of switching an application using two touch points according to an exemplary embodiment of the present invention.

Referring to FIG. 15, in operation 1510, a touch down event may be generated using two touch points in an application execution view by a touch input of a user. A touch event using two touch points may start by touching two points on the application execution view.

In operation 1520, the application switching apparatus may determine whether one touch point is fixed and the other touch point is changed. The application switching apparatus may determine whether the touch points are fixed or changed based on an amount of change in the coordinates of the touch points.

In operation 1530, if one touch point is fixed and the other touch point is changed, the application switching apparatus may determine whether the distance between the two touch points is maintained within a determined error range. If the distance between the touch points is maintained within the determined error range, the touch event may be recognized as an application switching request signal.

In operation 1540, if the distance between the touch points is maintained within the determined error range, the application switching apparatus may determine whether the changed touch point moves at least a determined distance from a touch start location.

In operation 1550, if the mobile touch point moves at least a determined distance from the touch start location, the application switching apparatus may determine an application corresponding to a moving direction of the changed touch point as an application that is to be run in the foreground.

Referring to FIG. 16, if a left-to-right flick 1620 using a Point B is generated while a Point A 1610 is touched and held in an App 2 execution view, App 1 set on the left may be executed in the foreground. That is, an application running in the foreground may be switched from App 2 to App 1. An application switching condition may correspond to a continuous touch on the Point A 1610, a directional flick 1620, and the distance between the Point A 1610 and the Point B maintained within a determined error range. The flick 1620 may be a clockwise dragging touch with respect to the fixed point A 1610. However, aspects need not be limited thereto such that the flick 1620 may include other gestures indicative of a general determinable direction.

If a right-to-left flick 1640 using a Point B is generated while a Point A 1630 is touched and held in the App 2 execution view, App 3 set on the right may be executed in the foreground. That is, an application running in the foreground may be switched from App 2 to App 3. The flick 1640 may be a counterclockwise dragging touch with respect to the fixed point A 1630. A multi-touch input on the application execution view may trigger an application switching operation, and a rotational dragging input from one of the multi-touch input toward a specific direction with respect to the other one of the multi-touch input may determine an application to be executed on the foreground. The touch input and the dragging input may be combined into a single continuous gesture to generate the application switching signal and the application distinguishing signal. The multi-touch input and the maintained distances between touch points 1610 and 1620 may determine whether the application switching operation is to be performed.

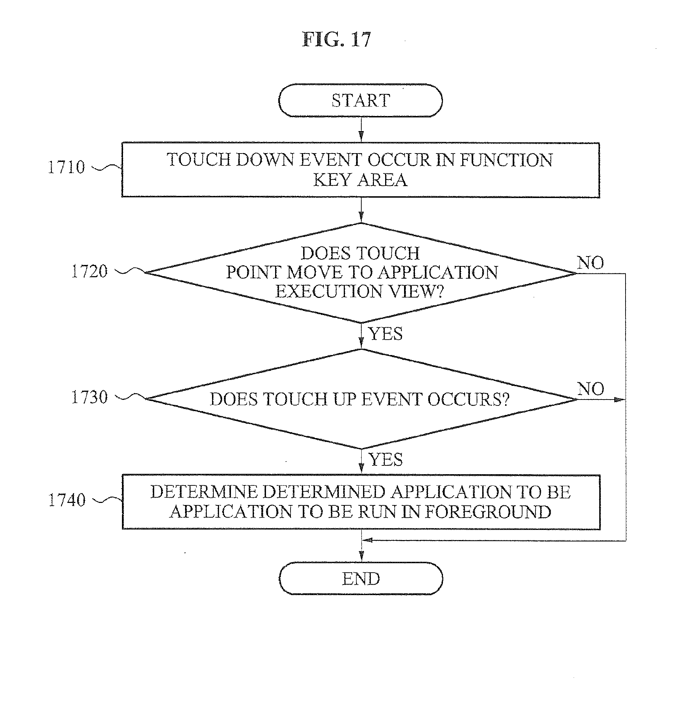

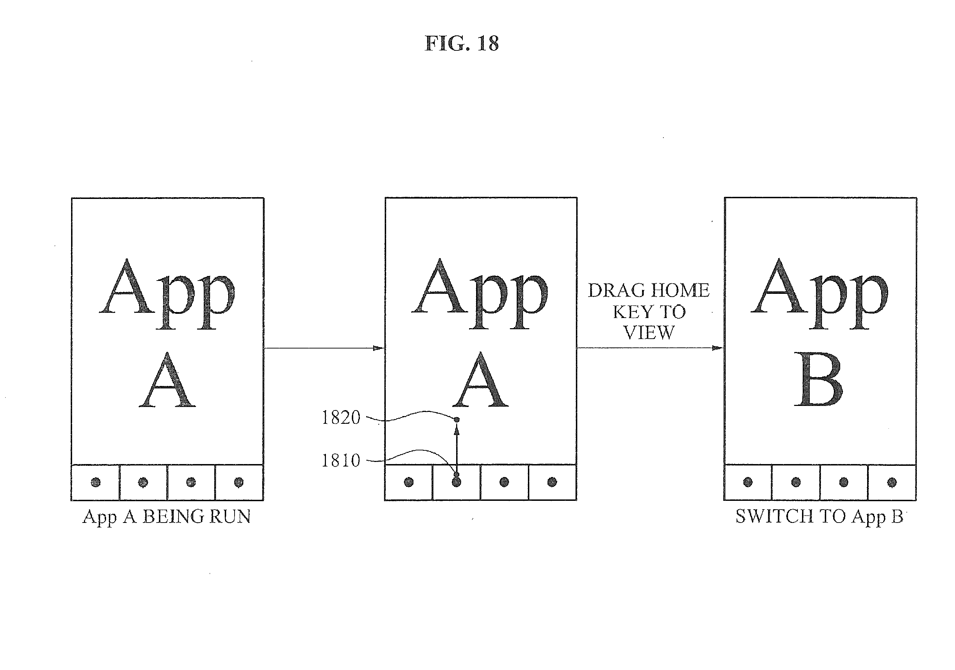

FIG. 17 is a flowchart illustrating a process of switching an application using a touch event moving from a function key area to an application execution area according to an exemplary embodiment of the present invention. FIG. 18 is a diagram illustrating a process of switching an application using a touch event moving from a function key area to an application execution area according to an exemplary embodiment of the present invention.

Referring to FIG. 17, in operation 1710, a touch down event may be generated in a function key area by a touch input of a user.

In operation 1720, the application switching apparatus may determine whether the touch point moves from the function key area to an application execution view. The application switching apparatus may determine whether a drag is generated from the function key area to the application execution view.

In operation 1730, if the touch point moves from the function key area to the application execution view, the application switching apparatus may determine whether a touch up event is generated from the application execution view.

In operation 1740, if the touch up event is generated, the application switching apparatus may determine a determined application as an application that is to be run in the foreground. For example, the most recently executed application may be determined as an application that is to be run in the foreground.

Referring to FIG. 18, if a touch down event 1810 is generated in the function key area during execution of App A and then a touch up event 1820 is generated after dragging the touch point to the App A execution view, a determined App B may be executed in the foreground. That is, an application running in the foreground may be switched from App A to App B. The function key may include a home key. A touch input on the function key area 1810 may trigger an application switching operation, and a dragging input from the touch input toward an application execution view may determine an application to be executed on the foreground. The touch input and the dragging input may be combined into a single continuous gesture to generate the application switching signal and the application distinguishing signal. The dragging input and the distance between a touch releasing point 1820 and the function key area 1810 may determine the application distinguishing signal. According to the distance between the touch releasing point 1820 and the function key area 1810, a background application may be distinguished and be executed in the foreground.

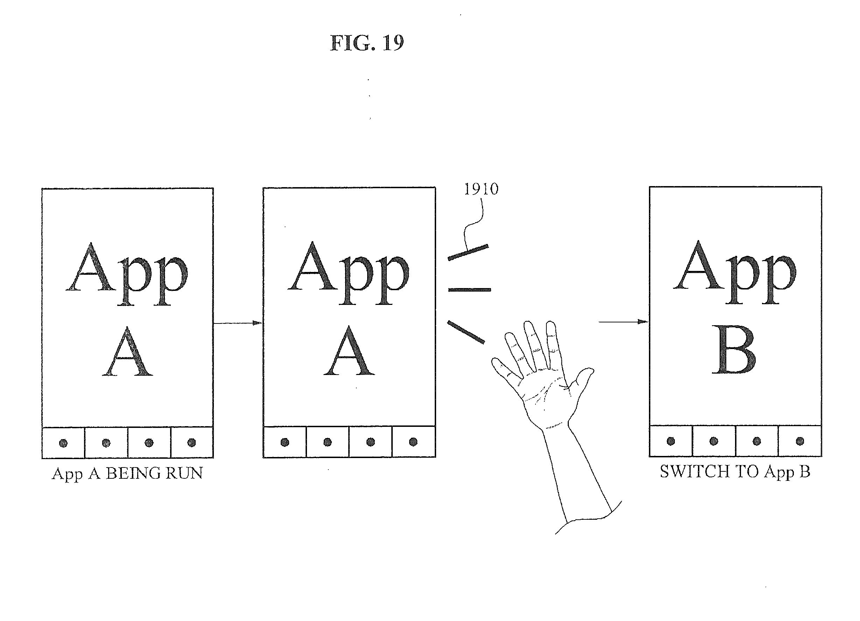

FIG. 19, FIG. 20, FIG. 21, and FIG. 22 are diagrams illustrating a process of switching an application based on an application switching request detected through a sensor or a camera according to an exemplary embodiment of the present invention.

Referring to FIG. 19, if a shock is transmitted to one side 1910 of the terminal during execution of App A, the application switching apparatus may recognize that the right side of the terminal was shocked using e.g., the terrestrial magnetism sensor, and may execute App B set on the right side of App A in the foreground. That is, an application running in the foreground may be switched from App A to App B. A shock applied to the terminal may be registered with a listener as an application switching request signal in advance. A tapping input 1910 on one side of mobile terminal may trigger an application switching operation, and the location of the tapping input 1910 may determine an application to be executed on the foreground.

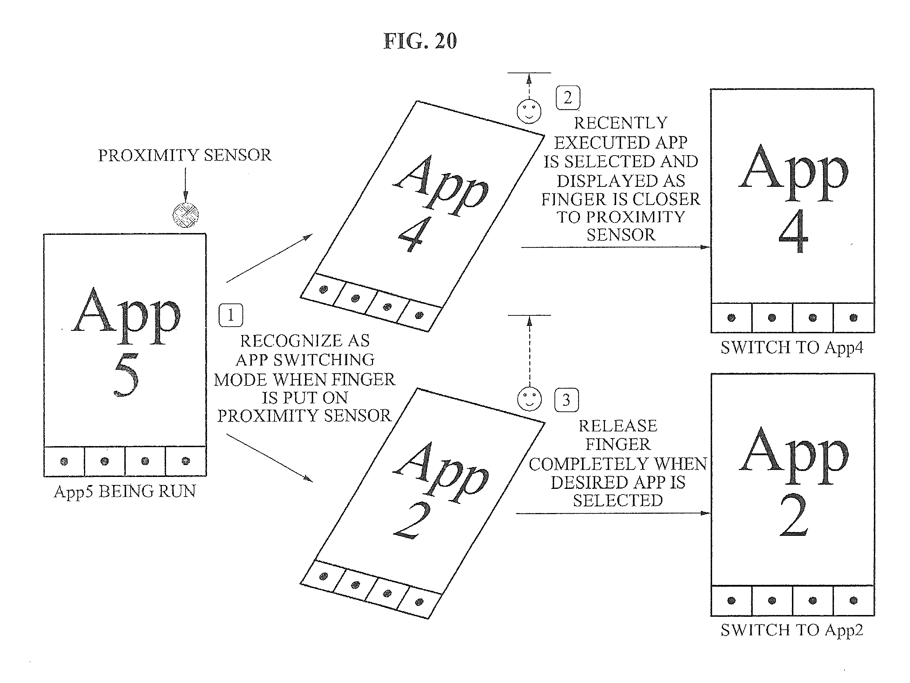

Referring to FIG. 20, if an object is sensed by a proximity sensor during execution of App 5, the application switching apparatus may recognize the object as an application switching request signal. When an object is sensed by the proximity sensor, the object may be registered with a listener as an application switching request signal in advance. For example, the object may include a finger. As the object moves closer to the proximity sensor, a recently executed application may be displayed. A user may select an application to be executed in the foreground by controlling the distance between the object and the proximity sensor. The application switching apparatus may execute the displayed application in the foreground when the object is removed from the proximity sensor. A sensing of an object by a proximity sensor may trigger an application switching operation, and a change of the distance between the object and the proximity sensor may determine an application to be executed on the foreground. The sensing of the object and the change of the distance between the object and the proximity sensor may be performed by a single continuous gesture to generate the application switching signal and the application distinguishing signal. The change of the distance may determine the application distinguishing signal. According to the change of the distance, a corresponding background application may be distinguished and be executed in the foreground.

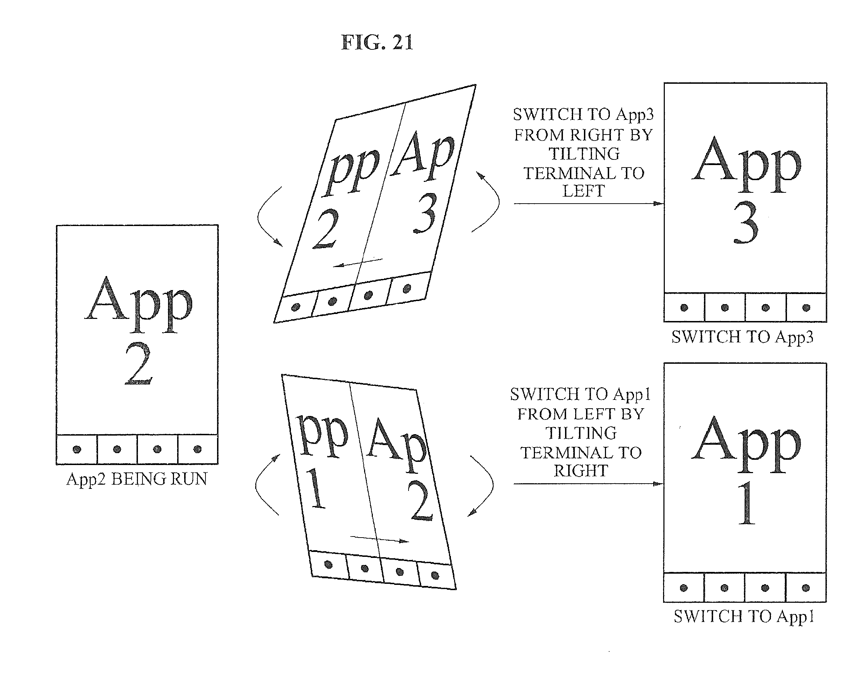

Referring to FIG. 21, if a left tilt of the terminal is sensed by e.g., the terrestrial magnetism sensor or a gyroscope sensor, the application switching apparatus may execute App 3 set on the right in the foreground. That is, an application running in the foreground may be switched from App 2 to App 3. If a right tilt of the terminal is sensed by the terrestrial magnetism sensor or the gyroscope sensor, the application switching apparatus may execute App 1 set on the left in the foreground. That is, an application running in the foreground may be switched from App 2 to App 1. A rotation of the mobile terminal may trigger an application switching operation, and the rotational direction of the mobile terminal may determine an application to be executed on the foreground.

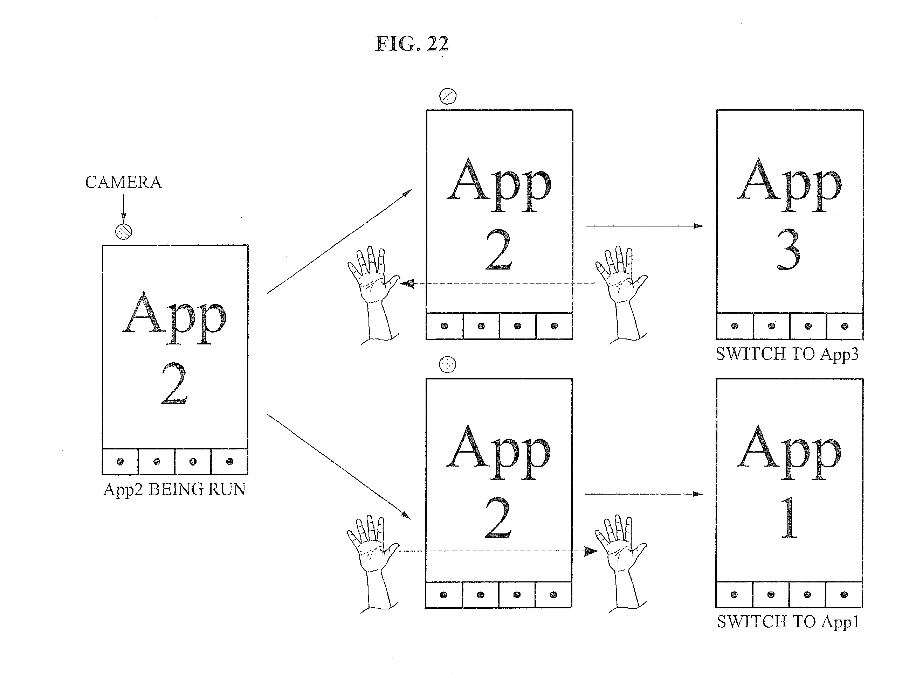

Referring to FIG. 22, if a left-to-right or right-to-left motion of a determined object is sensed through the camera, the application switching apparatus may switch to an application corresponding to the sensed moving direction. The application switching apparatus may switch an application by sensing a moving direction of an object through the camera. A sensing of an object by a camera may trigger an application switching operation, and a movement direction of the object may determine an application to be executed on the foreground. The sensing of the object and the movement of the object may be performed by a single continuous gesture to generate the application switching signal and the application distinguishing signal.

For example, if a right-to-left motion of a hand across the terminal is sensed through the camera, App 3 set on the right may be executed in the foreground. That is, an application running in the foreground may be switched from App 2 to App 3. If a left-to-right motion of a hand across the terminal is sensed through the camera, App 1 set on the left may be executed in the foreground. That is, an application running in the foreground may be switched from App 2 to App 1.

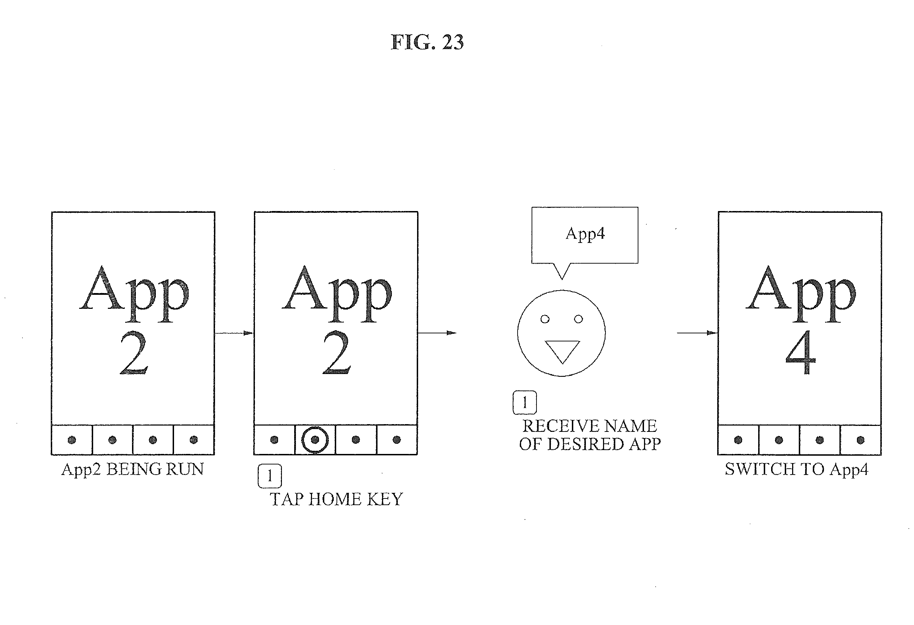

FIG. 23 is a diagram illustrating a process of switching an application based on an application switching request inputted using a voice signal according to an exemplary embodiment of the present invention.

Referring to FIG. 23, App 2 is running in the foreground and App 4 is running in the background. If an input of a voice signal indicating App 4 is received while a function key, such as a home key, is touched, App 4 may be executed in the foreground. That is, an application running in the foreground may be switched from App 2 to App 4. The application switching apparatus may check the name of an application by converting the voice input into text or data. A touch input on the function key, e.g., the home key, and an initialization of a voice sensor may trigger an application switching operation, and a voice input corresponding to a specific application may determine an application to be executed on the foreground. The touch input and the voice input may be combined into a single continuous gesture to generate the application switching signal and the application distinguishing signal.

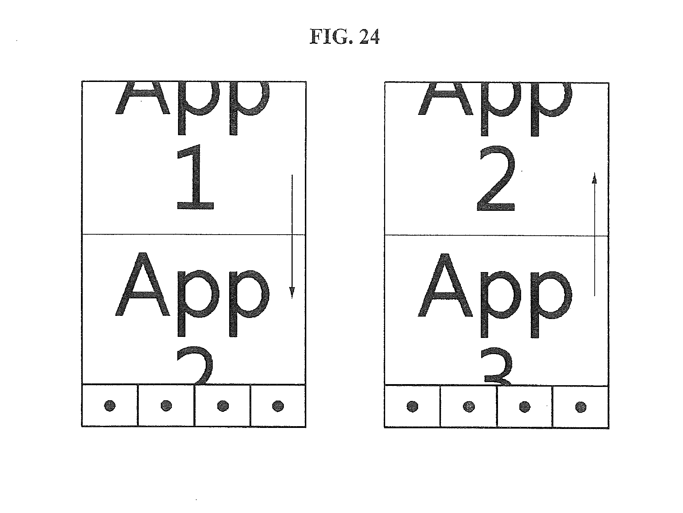

FIG. 24, FIG. 25, and FIG. 26 are diagrams illustrating an application switching scheme according to an exemplary embodiment of the present invention.

An animation effect may vary depending on an application switching scheme. The animation effect may be implemented by providing the animation effect to an activity associated with an application execution scheme.

The animation may be defined in an Extensible Markup Language (XML) as a resource. The defined animation may be applied to an activity.

The animation effect is described with reference to FIG. 24, FIG. 25, and FIG. 26.

FIG. 24 illustrates a vertical sliding animation effect. If an application running in the foreground is switched to an application set at the top, the application set at the top may slide down. If an application running in the foreground is switched to an application set at the bottom, the application set at the bottom may slide up.

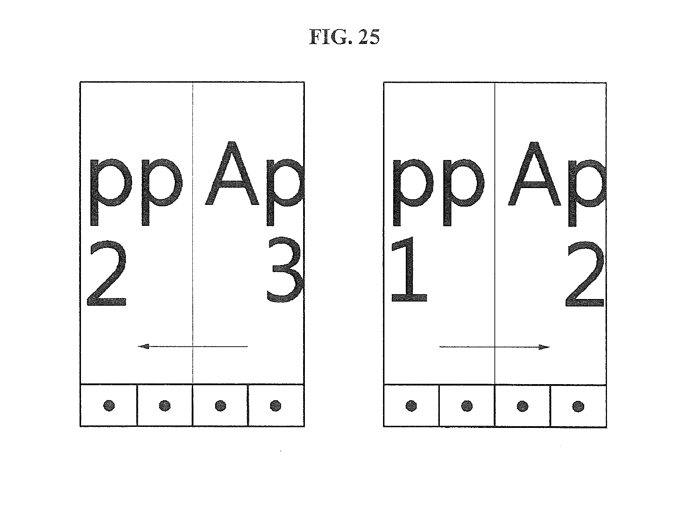

FIG. 25 illustrates a horizontal sliding animation effect. If an application running in the foreground is switched to an application set on the right, the application set on the right may be displayed by moving to the left. If an application running in the foreground is switched to an application set on the left, the application set on the left may be displayed by moving to the right.

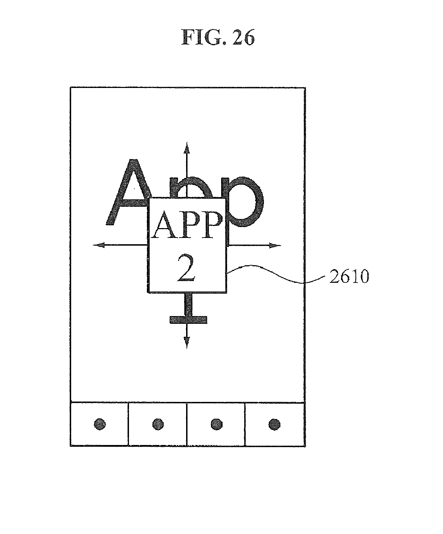

FIG. 26 illustrates an animation effect with simultaneous "Zoom In" and "Fade in". This animation effect may be used to display a determined application regardless of order in the list of applications. If App 1 is switched to App 2 2610, App 2 2610 may be zoomed in and App 1 falls into the background.

The exemplary embodiments of the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of non-transitory computer-readable media include magnetic media such as hard discs, floppy discs, and magnetic tape; optical media such as CD ROM discs and DVD; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

Exemplary embodiments of the present invention may switch an application running in the background to the foreground by sensing an application switching request signal inputted using a camera method, a sensor method, a touch method, and a voice method.

Further, exemplary embodiments of the present invention may enable a user to switch an application in a more convenient manner by outputting a list of applications running in the background through one touch event and switching a determined application selected in the outputted list of applications to the foreground.

Further, exemplary embodiments of the present invention may update a list of applications in the same manner as applications stored in an application stack if an application switched to the foreground is executed.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

An apparatus to switch an application includes an input unit to receive an input for switching a foreground application, the input including an application distinguishing portion associated with an application switching portion, a control unit to determine an application to be run in the foreground among the applications running in a background, the application distinguishing portion corresponding to the application, and an output unit to output the application in a display as the foreground application.

## Claims

1. An apparatus to switch an application, comprising:
an input unit to receive an input for switching a foreground application, the input comprising an application distinguishing portion associated with an application switching portion;
a control unit to determine an application to be run in the foreground among the applications running in a background, the application distinguishing portion corresponding to the application; and
an output unit to output the application in a display as the foreground application.

2. The apparatus of claim 1, wherein the input unit comprises:
a sensor input unit comprising at least one of a camera, a proximity sensor, a terrestrial magnetism sensor, and an acceleration sensor.

3. The apparatus of claim 1 or 2, wherein the output unit outputs final views of the applications running in the background on the display in response to the input, and the control unit determines the application being outputted to the display as the application to be run in the foreground if the outputted view is maintained for a period of time or a confirming touch event is generated through the outputted view.

4. The apparatus of one of claims 1 to 3, further comprising: a touch input unit to receive a touch input as the input, the touch input comprising a touch start location and a touch end location,
wherein the output unit sequentially outputs one or more background application images in a list according to the application distinguishing portion, and the control unit selects the application corresponding to a distance between the touch start location and the touch end location when the input is released;
wherein preferably the control unit determines the application as the foreground application if a background application image corresponding to the application is outputted when the touch input is released.

5. The apparatus of one of claims 1 to 4, wherein the control unit determines the application corresponding to a voice input inputted when a function key is being touched.

6. The apparatus of one of claims 1 to 5, wherein the control unit comprises:
a task managing unit to receive a list of tasks being executed and final view information of the tasks;
a task storing unit to store the list of tasks; and
an event receiving unit to receive an update event signal for the list of tasks if a change in the list of tasks occurs;
wherein the event receiving unit preferably receives at least one of an event signal requesting the list of tasks stored in the task storing unit,
an event signal requesting information about a front task among the list of tasks stored in the task storing unit, an event signal requesting information about a last task among the list of tasks stored in the task storing unit, and an event signal requesting information about a task matched to a name of a determined application among the list of tasks stored in the task storing unit.

7. The apparatus of one of claims 1 to 6, wherein the input comprises a touch input received in an indicator area of a touch interface or a function key area of the touch interface.

8. The apparatus of one of claims 1 to 7, wherein the application switching portion is associated with a multi-touch input, and the application distinguishing portion is associated with a moving direction of the multi-touch input.

9. The apparatus of one of claims 1 to 8, wherein the application switching portion is associated with a multi-touch input comprising a first touch on a function key area of a touch interface and a second touch on an application execution view of the display, and the application distinguishing portion is associated with a moving direction of the second touch.

10. The apparatus of one of claims 1 to 9, wherein the output unit outputs one or more background application images stored in a list if the application switching portion is determined.

11. The apparatus of one of claims 1 to 10,
wherein the application switching portion is associated with a multi-touch input comprising a first touch and a second touch on an application execution view of the display, and the application distinguishing portion is associated with a moving direction of the second touch with respect to the first touch while a location of the first touch is maintained;
or/and
wherein the application switching portion is associated with a drag touch input from a first touch on a function key area of a touch interface to a second touch on an application execution view of the display, and the application distinguishing portion is associated with a moving distance between the first touch and the second touch.

12. A method that uses a processor to switch an application, comprising:
receiving an application switching input for switching a foreground application, the application switching input comprising an application switching portion and an application distinguishing portion contiguous with the application switching portion;
determining one or more background applications stored in an active application list in response to the application switching portion;
determining an application to be run in a foreground among the applications in the active application list, the application distinguishing portion corresponding to the application; and
outputting, using the processor, the application in a display as the foreground application.

13. The method of claim 12, wherein the application switching input comprises a touch input received in an indicator area of a touch interface or a function key area of the touch interface.

14. The method of claim 12 or 13, further comprising:
sequentially displaying background application images stored in the active application list according to the application distinguishing portion; and
selecting the application corresponding to a distance between the touch start location and the touch end location when the input is released.

15. The method of one of claims 12 to 14, further comprising: determining the application corresponding to a voice input inputted when a function key is being touched.

16. The method of one of claims 12 to 15,
wherein the application switching portion is associated with a multi-touch input, and the application distinguishing portion is associated with a moving direction of the multi-touch input;
or/and
wherein the application switching portion is associated with a drag touch input from a first touch on a function key area of a touch interface to a second touch on an application execution view of the display, and the application distinguishing portion is associated with a moving distance between the first touch and the second touch.

17. A method that uses a processor to switch an application, preferably according to one of claims 12 to 16, comprising:
receiving a request signal requesting switching from an application running in a foreground to one of applications running in a background;
determining whether the request signal is inputted using an input method among a sensor input, a touch input, and a voice input;
determining whether the request signal is an application switching request signal;
determining an application that is to be run in the foreground among the applications running in the background based on the input method and the application switching request signal; and
outputting an application switching operation for switching from the application running in the foreground to the determined application that is to be run in the foreground among the applications running in the background.
